# EUROPEAN PATENT SPECIFICATION

(11) **EP 2 677 411 B1**
(45) Date of publication and mention of the grant of the patent: **31.07.2019**
(21) Application number: 13160989.3
(22) Date of filing: 26.03.2013
(51) Int. Cl.: G06F 3/0488, G06F 1/16, G06F 3/041

(54) **Apparatus and method for controlling a terminal using a touch input**
Vorrichtung und Verfahren zur Steuerung eines Endgeräts mittels Berührungseingabe
Appareil et procédé pour commander un terminal utilisant une entrée tactile

(30) Priority: 21.06.2012 KR 20120066612
(43) Date of publication of application: 25.12.2013
(73) Proprietor: Pantech Inc., Mapo-gu Seoul (KR)
(72) Inventor: Moon, Sung Yeon, 121-270 Seoul (KR); Park, Won Seok, 121-270 Seoul (KR); Seo, Jun Hyuk, 121-270 Seoul (KR)
(74) Representative: Weickmann & Weickmann PartmbB

(56) References cited:
- EP-A1- 2 341 414
- EP-A1- 2 341 419
- EP-A1- 2 395 416
- US-A1- 2006 119 588
- US-A1- 2009 315 834
- US-A1- 2010 295 797

## Description

### BACKGROUND

### FIELD

Exemplary embodiments relate to apparatuses and methods for controlling an operation of an application by recognizing a touch input on a back of a terminal.

### DISCUSSION OF THE BACKGROUND

With development in technology associated with a portable terminal, the types of applications and the number of applications executable in the portable terminal have been diversified. An application installed in a portable terminal may be executable based on a user selection. And an execution process of the application is displayed on a screen of the portable terminal. Thus, a user may verify that the selected application is being executed by the portable terminal.

In the portable terminal, a user interface is generally configured using a front touch window. However, when a user desires to input feedback for a game or an application being executed by the portable terminal, the user may be inconvenienced due to blocking of the front touch window of the portable terminal.

In addition, a touch input on the front touch window of the portable terminal may leave a stain, a fingerprint, and the like on the window and, thus, may also inconvenience the user of the mobile terminal.

US-A1-2010/0295797 relates to a hand-held electronic device including a case having one or more major surfaces. A visual display and a touch pad are disposed on at least one of the major surfaces. A processor is operatively coupled to the visual display and touch screen.

US-A1-2009/0315834 discloses an apparatus, method and computer program product provided for using dual side input devices for controlling an electronic device and applications running thereon. The user might cause a region of an image displayed on the front of the device to be magnified by touching the back of the device and location that corresponds to the region. EP-A1- 2 341 419 discloses the subject matter of the preamble of the independent claims, and in particular a portable electronic device comprising a display on a front side of the device and a touch-sensitive surface on a rear side of the device and a touch input mapping means arranged to map a position of detected touch on the touch sensitive surface to a position on the display in which the touch sensitive surfaces are similarly shaped and orientated to the display and a touch at a position on the touch sensitive surface causes a display event at a corresponding position on the display.

US-A1-2006/0119588 discloses an apparatus and method of processing touch pad input information. The input region of a touch pad is mapped to a display region as absolute coordinates such that information can be directly input using the touch pad.

EP-A1-2 341 414 A discloses a portable electronic device comprising a display arranged on a first side of the device. The display has a first touch sensitive surface. The device comprises a second touch sensitive surface separate from the display. The touch input regions are assigned to corresponding user control commands so that at least a first subset of the user control commands corresponds to touch input regions on the first touch sensitive surface and at least a second subset of the user control commands corresponds to touch input regions on the second touch sensitive surface.

### SUMMARY

It is an object of the present invention to provide a terminal to control an operation according to a touch input and a method for controlling an operation of a terminal according to a touch input allowing to control the terminal in a simple manner. This object is solved according to the invention by claims land 7. Preferred embodiments of the invention are described in the dependent claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a block diagram illustrating an apparatus to control a terminal according to a touch input on a surface of a terminal, such as by a touch on a back of the terminal, according to exemplary embodiments of the present invention.
FIG. 2 is a block diagram illustrating an apparatus to control a terminal according to a touch input on a surface of a terminal, such as by a touch on a back of the terminal, according to exemplary embodiments of the present invention.
FIG. 3 is a diagram including images (a), (b) and (c) illustrating a mapping process in an apparatus to control a terminal according to a touch input on a surface of a terminal, such as by a touch on a back of the terminal, according to exemplary embodiments of the present invention.
FIG. 4 is a block diagram illustrating an apparatus to control a terminal according to a touch input on a surface of a terminal, such as a by touch on a back of the terminal, according to exemplary embodiments of the present invention.
FIG. 5 is a block diagram illustrating an apparatus to control a terminal according to a touch on a surface of a terminal, such as by a touch on a back of the terminal, according to exemplary embodiments of the present invention.
FIG. 6, FIG.7 and FIG. 8 are block diagrams to illustrate examples of employing apparatus to control a terminal according to a touch input on a surface of a terminal, such as by a touch on a back of the terminal, according to exemplary embodiments of the present invention.
FIG. 9 is a flowchart illustrating a method for controlling a terminal according to a touch input on a surface of a terminal, such as by a touch on a back of the terminal, according to exemplary embodiments of the present invention.
FIG. 10 is a flowchart illustrating a method for controlling a terminal according to a touch input on a surface of a terminal, such as by a touch on a back of the terminal, according to exemplary embodiments of the present invention.
FIG. 11 is a flowchart illustrating a method for controlling a terminal according to a touch input on a surface of a terminal, such as by a touch on a back of the terminal, according to exemplary embodiments of the present invention.
FIG. 12, FIG. 13, FIG. 14 including images (a) - (f), and FIG. 15 are diagrams illustrating examples of employing methods for controlling a terminal according to a touch input on a surface of a terminal, such as by a touch on a back of the terminal, according to exemplary embodiments of the present invention.
FIG. 16 is a flowchart illustrating a method for controlling a terminal according to a touch input on a surface of the terminal, such as by a touch on a back of the terminal, according to exemplary embodiments of the present invention.

### DETAILED DESCRIPTION

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention defined by the appended claims to those skilled in the art. In the drawings, the size and relative sizes of layers and regions may be exaggerated for clarity. Like reference numerals in the drawings denote like elements.

The following description of exemplary embodiments is provided to assist in gaining a comprehensive understanding of the methods, apparatuses, and/or systems described herein. Accordingly, various changes, modifications, and equivalents of the methods, apparatuses, and/or systems described herein will be suggested to those of ordinary skill in the art, and should not be construed in a limiting sense. Also, descriptions of well-known functions and constructions may be omitted for increased clarity and conciseness.

It will be understood that when an element is referred to as being "connected to" another element, it can be directly connected to the other element, or intervening elements may be present; and, as to wireless communication, may be interpreted as being wirelessly connected, such as a wireless connection between a terminal and a base station or external server, for example.

Hereinafter, a terminal may include, for example, a terminal, a portable terminal, a mobile communication terminal, handheld, portable or tablet computer or communication devices, or other apparatus, and methods for controlling a terminal according to a touch input, such as by a touch on a back of the terminal, will be described in more detail with reference to the drawings, and should not be construed in a limiting sense. Also the terminal, and the components, devices and units of the terminal herein described, include hardware and software, and can also include firmware, to perform various functions of the terminal including those for controlling a terminal according to a touch input, such as by a touch on a back of the terminal, including those described herein, as may be known to one of skill in the art. As such, a terminal as used herein should not be construed in a limiting sense and may include the above and other apparatus for controlling a terminal according to a touch input, such as by a touch on a back of the terminal.

Also, a terminal may include, for example, any of various devices or structures used for wireless or wired communication can be wired or wireless connected to a base station, server or network, and may include another terminal, and also may include hardware, firmware, or software to perform various functions for controlling a terminal according to a touch input, such as by a touch on a back of the terminal, including those described herein, as may be known to one of skill in the art.

Hereinafter, a terminal, such as including, for example, a terminal, portable terminal, a mobile terminal, a mobile communication terminal, handheld, portable or tablet computer or communication devices, or other apparatus, and methods for controlling a terminal according to a touch input, such as by a touch on a back of the terminal, will be described in more detail with reference to the drawings.

The exemplary embodiments of the terminals, terminal controlling apparatus, and the various modules, components and units, illustrated and described herein, are associated with and may include any of various memory or storage media for storing software, program instructions, data files, data structures, and the like, and are associated with and may also include any of various processors, computers or application specific integrated circuits (ASICs) for example, to implement various operations to provide for control of a terminal according to a touch input, such as by a touch on a back of the terminal, as described herein.

The software, media and program instructions may be those specially designed and constructed for the purposes of the present invention, or they may be of the kind well-known and available to those having skill in the computer software arts. Examples of program instructions include both machine code, such as produced by a compiler, and files containing higher level code that may be executed by the computer using an interpreter. The described hardware devices and units may, for example, include hardware, firmware or other modules to perform the operations of the described exemplary embodiments of the present invention.

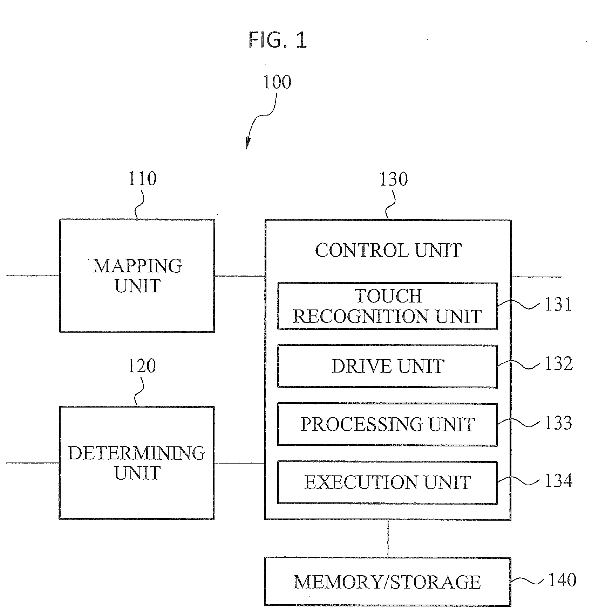

FIG. 1 is a block diagram illustrating an apparatus to control a terminal according to a touch input, such as by using a touch on a back of the terminal, (hereinafter, also referred to as a terminal controlling apparatus) according to exemplary embodiments of the present invention.

Referring to FIG. 1, the terminal controlling apparatus100 according to exemplary embodiments may include a mapping unit 110, a determining unit 120, and a control unit 130.

The term "application" used in the following description may indicate all the application programs that operate in an operating system (OS) of a terminal, and should not be construed in a limiting sense.

The mapping unit 110 may map a touch recognition area on a first surface of the terminal, such as a back touch recognition area on a back of the terminal, on or to an active area that is determined on a display screen on a second surface of the terminal, such as on a front display screen on a front of the terminal, based on a size of the touch recognition area, such as the back touch recognition area, and a size of the active area, according to exemplary embodiments. Although the touch recognition area and the active area are described herein with respect to front and back, aspects need not be limited thereto, such that the touch recognition area and the active area may be disposed on or any of first or second surfaces of the terminal, and such first and second surfaces may be adjacent surfaces of the terminal, for example, and should not be construed in a limiting sense.

Also, for example, a touch pad may be employed for the touch recognition area, such as the back touch recognition area. The touch pad may include a touch integrated circuit (IC), and may recognize a touch input via the touch IC, for example.

Also, considering possible design constraints of an antenna area of the terminal, such as a near field communication (NFC) antenna area, a wireless charging area, and the like, a physical size of a touch pad, such as a back touch pad, may be limited on a surface of a terminal, such as on a back portion of a terminal. Accordingly, the touch pad, such as a back touch pad, with a size less than a display screen, such as the front display screen, of the terminal may need to be positioned on a surface of the terminal, such as on the back of the terminal, for example.

The size of the active area may be equal to or less than the size of the display screen, such as the front display screen. For example, the size of the active area may be equal to the size of the display area on the display screen, such as equal to the size of the front display area on the front display screen, and may also be less than the size of the display area on the display screen, such as less than the size of the front display area on the front display screen, for example.

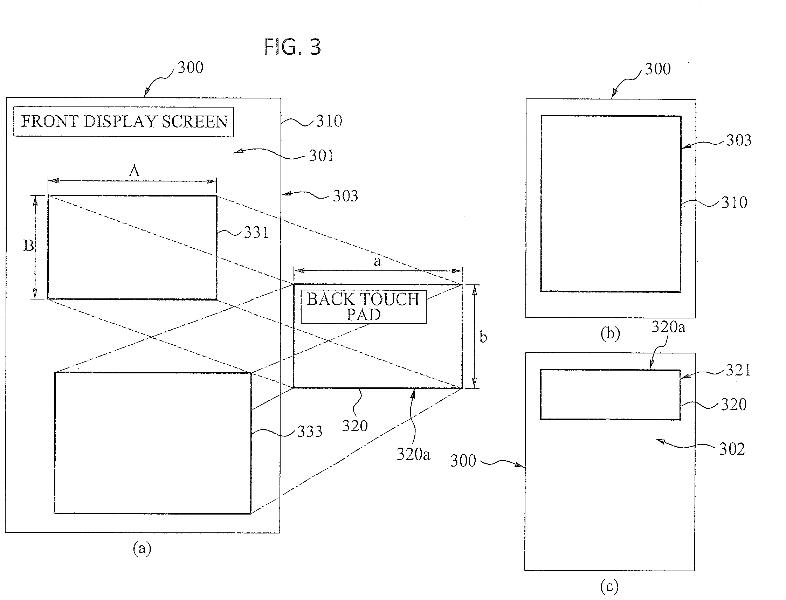

The mapping unit 110 may map the touch recognition area on a first surface of the terminal, such as the back touch recognition area, on the active area by comparing a length of an axis x and a length of an axis y of the touch recognition area, such as the back touch recognition area, with a length of an axis x and a length of an axis y of the active area of a display screen on a second surface of the terminal, such as on the front display screen, for example. The mapping process will be further described with reference to FIG. 3, according to exemplary embodiments.

The determining unit 120 may determine at least one of a location of the active area to be displayed on the display screen, such as the front display screen, and the size of the active area. The active area may be positioned on any of various locations on the display area of the display screen, such as the front display area of the front display screen. Also, a location of the active area may be determined and set at a fixed location of the display area, such as the front display area. Alternatively, when a plurality of locations is displayed on a display screen, such as the front display screen, and a single location is selected from a user, the determining unit 120 may determine the selected location to be the location of the active area to be used. If the touch input is recognized on the touch recognition area, such as the back touch recognition area of a touch pad of the terminal, the determining unit 120 may determine the location of the active area based on a location at which the touch input is performed, such as on the touch pad on the back touch recognition area.

The size of the active area may be determined and set to be a fixed size, for example. The size of the active area may be determined and set by a manufacturer or programmer or may be determined and set by a user. If a plurality of sizes is displayed on the display screen, such as the front display screen, and a single size is selected from the user, the determining unit 120 may determine the selected size to be the size of the active area to be used, for example, according to exemplary embodiments.

When one of reference sizes of the active area is selected from the user of the terminal, the determining unit 120 may determine the selected size to be the size of the active area to be displayed on the display screen, such as the front display screen of the terminal.

The mapping unit 110 may perform scale mapping of the determined size of the active area of the display screen, such as of the front display screen, and the size of the touch recognition area, such as the back touch recognition area. For example, scaling mapping may indicate matching a horizontal length and a vertical length of the touch recognition area, such as the back touch recognition area, with a horizontal length and a vertical length of the active area of the display screen, such as the of front display screen, by comparing the size of the active area and the size of the touch recognition area, such as the back touch recognition area, according to exemplary embodiments.

The control unit 130 may control an operation of the terminal based on a touch input on the touch recognition area, such as on the back touch recognition area, of the terminal. Also, the control unit 130 may control an operation of an application on the front display screen of the terminal based on a touch input on the touch recognition area, such as the back touch recognition area, of the terminal, for example, according to exemplary embodiments.

For example, when the touch input is performed on the touch recognition area, such as the back touch recognition area, of the terminal, the control unit 130 may generate a gesture event corresponding to the touch input and control the operation of the application by applying the gesture event to the application. When the touch input is performed, the control unit 130 may generate a gesture event corresponding to the touch input and may control the operation of the terminal by applying the gesture event to the terminal, for example, according to exemplary embodiments.

For example, when a double-tap gesture event is set as a home key event, and when a double tap is performed to the touch recognition area, such as to the back touch recognition area, the control unit 130 may generate the double-tap gesture event and may control an operation of the terminal by applying, to the terminal, the home key event corresponding to the double-tap gesture event, according to exemplary embodiments.

Based on the touch input on the touch recognition area, such as the back touch recognition area, the control unit 130 may move the active area on the display screen, such as the front display screen, of the terminal determined by the determining unit 120 on the display area, such as the front display area, of the terminal. Even though the location of the active area is determined by the determining unit 120, the control unit 130 may generate the gesture event for moving the location of the active area based on the touch input to the touch recognition area, such as the back touch recognition area. And the control unit 130 may move the active area on the display screen, such as on the front display screen, to correspond to the touch input, according to exemplary embodiments.

The control unit 130 may include a touch recognition unit 131, a drive unit 132, a processing unit 133, and an execution unit 134. Also, a memory/storage 140 may be associated with the control unit 130 and the terminal controlling apparatus to store application, programs, instruction and data to implement controlling a terminal using a touch on the a surface of the terminal such as on the back of the terminal, according to exemplary embodiments.

When the touch input on the touch recognition area, such as on the back touch recognition area, is recognized, the touch recognition unit 131 may generate an interrupt. And the interrupt may indicate a signal informing the drive unit 132 that the touch input to the touch recognition area, such as the back touch recognition area is recognized. For example, the touch recognition unit 131 may be configured as a touch IC.

The touch recognition unit 131 may store, in an address of a memory, such as memory storage 140, touch location information about a location at which the touch input is performed. The touch location information may be stored as an x axial value and a y axial value or an index of a touch sensor or a touch panel on the touch recognition area, such as the back touch recognition area, for example. The touch recognition unit 131 may also store the touch location information in a buffer, such as in memory/storage 140.

The mapping unit 110 may generate converted touch location information by converting the touch location information to correspond to the size of the active area of the display screen, such as of the front display screen. Also, the converted touch location information may indicate location information corresponding to the touch location information in the active area of the display screen, such as the front display screen, for example, according to exemplary embodiments.

When the interrupt generated by the touch recognition unit 131 is recognized, the drive unit 132 may verify the touch location information from at least one of the address of the memory and the buffer, such as from memory/storage 140. The drive unit 132 may verify the touch location information using a serial communication scheme, for example. The serial communication scheme may include an inter-integrated circuit (I2C) scheme, for example. The drive unit 132 may transfer, to the processing unit 133, the converted touch location information, which may correspond to the verified touch location information, generated by the mapping unit 110. For example, the drive unit 132 may include a driver that recognizes an operation of the touch IC.

The processing unit 133 may determine an event type corresponding to the touch input based on the converted touch location information. The event type may include a gesture event, a key event, and the like. The gesture event may include an event about a general touch gesture such as a scroll to up, down, left, and right, flicking, a tap, a double tap, a multi-touch, and the like, for example. The key event may include, for example, a volume key event, a home key event, a camera execution key event, and the like, that are basically set in the terminal. A reference touch input generated as an event may be defined as the key event. For example, in a case where a multi-touch is performed using two fingers, when a drag up is performed, it may be defined as a volume-up key event. And when a drag down is performed, it may be defined as a volume-down key event.

For example, when the converted touch location information repeatedly indicates the same location, the processing unit 133 may interpret the converted touch location information as a double tap. When the double tap is basically set as the volume key event in the terminal, the processing unit 133 may interpret the double tap as the volume-up key event based on a reference scheme, for example. In addition, based on the reference scheme, the processing unit 133 may interpret the double tap as the volume-down key event.

Also, the processing unit 133 may convert the converted touch location information and information about the determined event type to be suitable for or compatible with a standard of an OS supported by the terminal. The processing unit 133 may process and pack the converted touch location information and information about the determined event type to information required by the standard of the OS, for example. Information required by the standard of the OS may include an identification (ID) of the back touch recognition area, the converted touch location information, the determined event type, a gesture, and the like, for example.

Continuing with reference to FIG. 1, the processing unit 133 may transfer the processed and packed information to the execution unit 134.

The execution unit 134 may execute an application on the display screen, such as on the front display screen, of the terminal based on the converted information to be suitable for or compatible with a standard. For example, the execution unit 134 may interpret the ID of the touch recognition area, such as of the back touch recognition area, from the processed and packed information and, thereby, recognize that the touch input is performed on the touch recognition area, such as on the back touch recognition area, of the terminal, according to exemplary embodiments. When the determined event type is a flicking gesture, for example, the execution unit 134 may apply the flicking gesture to the application.

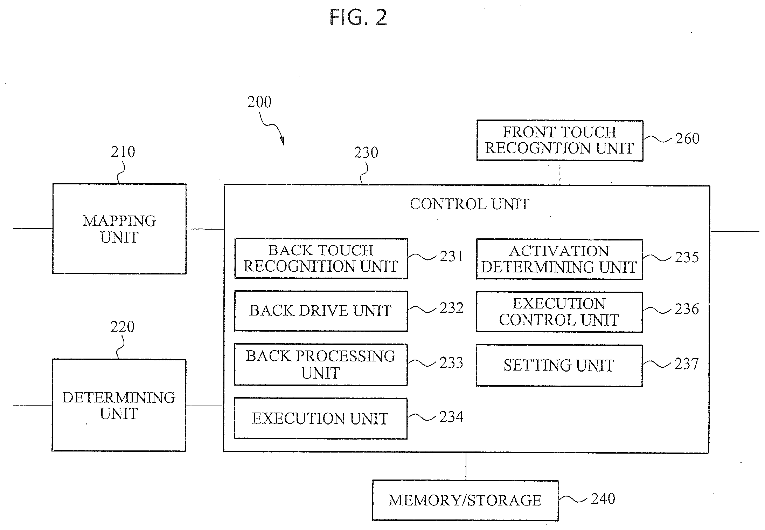

FIG. 2 is a block diagram illustrating an apparatus to control a terminal using a touch on a surface of the terminal, such as on a back of the terminal, according to exemplary embodiments of the present invention.

Referring to FIG. 2, the terminal controlling apparatus 200 according to exemplary embodiments may include a mapping unit 210, a determining unit 220, and a control unit 230.

The mapping unit 210 may map a touch recognition area, such as a back touch recognition area, of the terminal on an active area that is determined on a display screen, such as on a front display screen, of the terminal, based on a size of the touch recognition area, such as the back touch recognition area, and a size of the active area on a display screen, such as the front display screen, according to exemplary embodiments.

For example, a touch pad may be employed for the touch recognition area, such as the back touch recognition area. The touch pad may include a touch IC, and may recognize a touch input via the touch IC.

The mapping unit 210 may map the touch recognition area, such as the back touch recognition area, on or to the active area on the display screen, such as the front display screen, by comparing a length of an axis x and a length of an axis y of the touch recognition area, such as the back touch recognition area, with a length of an axis x and a length of an axis y of the active area on the display screen, such as the front display screen. The mapping process will be further described with reference to FIG. 3, according to exemplary embodiments.

The determining unit 220 may determine at least one of a location of the active area to be displayed on the display screen, such as the front display screen, and the size of the active area. The active area may be positioned on any of various locations of the display area, such as the front display area, according to exemplary embodiments. And a location of the active area may be determined and set at a reference location on the display screen, such as the front display screen. Alternatively, when a plurality of locations is displayed on the display screen, such as the front display screen, and a single location is selected from a user, the determining unit 220 may determine the selected location to be the location of the active area on the display screen, such as the front display screen to be used. Alternatively, when the touch input is recognized on the touch recognition area, such as the back touch recognition area, the determining unit 220 may determine the location of the active area on the display screen, such as the front display screen, based on a location at which the touch input is performed on the touch recognition area, such as the back touch recognition area, according to exemplary embodiments.

The size of the active area on the display screen, such as the front display screen may be determined and set to be a reference size, for example. If a plurality of sizes is displayed on the display screen, such as the front display screen, and a single size is selected from the user, the determining unit 220 may determine the selected size to be the size of the active area on the display screen, such as the front display screen, to be used, according to exemplary embodiments.

When one of the reference sizes of the active area on the display screen, such as the front display screen, is selected from the user of the terminal, the determining unit 220 may determine the selected size to be the size of the active area to be displayed on the display screen, such as the front display screen, according to exemplary embodiments.

Based on the touch input on the touch recognition area, such as the back touch recognition area, the control unit 230 may control an operation of an application on the display screen, such as the front display screen, according to exemplary embodiments. When the touch input is performed, the control unit 230 may generate a gesture event indicating the touch input and may control the operation of the application by applying the gesture event to the application, for example.

The control unit 230 may include a back touch recognition unit 231, a back drive unit 232, a back processing unit 233, an execution unit 234, an activation determining unit 235, an execution control unit 236, and a setting unit 237. A memory/storage 240 may be associated with the terminal controlling apparatus 200 to store programs, applications and data to implement controlling an operation or an application on a terminal using a touch on a surface of terminal, such as on the back of the terminal, according to exemplary embodiments.

In addition to a configuration of processing the touch input on the display screen, such as the front display screen, of the terminal, the control unit 230 may also include a configuration for processing a touch input on the touch recognition area, such as the back touch recognition area, of the terminal, according to exemplary embodiments. As a part of the configuration for processing the touch input on the touch recognition area, such as the back touch recognition area, of the terminal , the back touch recognition unit 231, the back drive unit 232, and the back processing unit 233 may be included in such configuration, for example according to exemplary embodiments.

When the touch input on the touch recognition area, such as the back touch recognition area, of the terminal is recognized, the back touch recognition unit 231 may generate an interrupt. And the interrupt may indicate a signal informing the back drive unit 232 that the touch input is recognized. For example, the back touch recognition unit 231 may be configured as a touch IC, according to exemplary embodiments.

The back touch recognition unit 231 may store, in an address of a memory, such as memory/storage 240, touch location information about a location at which the touch input is performed. The touch location information may be stored as an x axial value and a y axial value or an index of a touch sensor or of a touch panel on the touch recognition area, such as the back touch recognition area, of the terminal, for example. The back touch recognition unit 231 may also store the touch location information in a buffer, such as in memory/storage 240, for example.

The mapping unit 210 may generate converted touch location information by converting the touch location information of a touch input to the touch recognition area, such as the back touch recognition area, to correspond to the size of the active area on the front display screen. The converted touch location information may indicate location information corresponding to the touch location information in the active area on the display screen, such as the front display screen, according to exemplary embodiments.

When the interrupt generated by the back touch recognition unit 231 is recognized, the back drive unit 232 may verify the touch location information from at least one of the address of the memory/storage 240 and the buffer, such as in the memory/storage 240. The back drive unit 232 may verify the touch location information using a serial communication scheme, for example. The serial communication scheme may include an I2C scheme, for example. The back drive unit 232 may transfer, to the back processing unit 233, the converted touch location information generated by the mapping unit 210. For example, the back drive unit 232 may include a driver that recognizes an operation of the touch IC.

The back processing unit 233 may generate a gesture event corresponding to the touch input based on the converted touch location information. The gesture event may include a scroll to up, down, left, and right, flicking, a tap, a double tap, a multi-touch, and the like, for example. And when the converted touch location information indicates a left-to-right direction, the back processing unit 233 may interpret the converted touch location information as a flicking event, for example.

The back processing unit 233 may convert the converted touch location information and information about the gesture event generated by the back processing unit 233 to be suitable for or compatible with a standard of an OS supported by the terminal, for example, according to exemplary embodiments.

The back processing unit 233 may process and pack the converted touch location information and information about the gesture event to information required by the standard of the OS. Information required by the standard of the OS may include an ID of the touch recognition area, such as the back touch recognition area, the converted touch location information, the generated gesture event, and the like, for example, according to exemplary embodiments.

Also, according to exemplary embodiments, the back drive unit 232 may generate a gesture event corresponding to the touch input, based on converted touch location information generated by the mapping unit 210. And the back processing unit 233 may convert the converted touch location information and information about the generated gesture event to be suitable for or compatible with a standard of the OS supported by the terminal, according to exemplary embodiments.

According to exemplary embodiments, when the touch input on the touch recognition area, such as the back touch recognition area, of the terminal is recognized, the back touch recognition unit 231 may store, in an address of the memory/storage 240, converted touch location information that is generated by the mapping unit 210. The back touch recognition unit 231 may generate a gesture event corresponding to the touch input based on the converted touch location information. The back touch recognition unit 231 may store the generated gesture event in the memory/storage 240 or a buffer, such as in the memory/storage 240, for example.

When the interrupt is recognized, the back drive unit 232 may verify the converted touch location information and information about the gesture event, and may transfer the verified converted touch location information and information about the gesture event to the back processing unit 233. The back processing unit 233 may convert the converted touch location information and information about the gesture event to be suitable for or compatible with the standard of the OS supported by the terminal, for example, according to exemplary embodiments.

The execution unit 234 may execute an application on the display screen, such as the front display screen, based on the converted information to be suitable for or compatible with a standard. For example, the execution unit 234 may recognize that the touch input is performed on the touch recognition area, such as the back touch recognition area, of the terminal by interpreting an ID of the touch recognition area, such as the back touch recognition area, from the processed and packed information. When the gesture event is a double-tap gesture, for example, the execution unit 234 may apply the double-tap gesture to the application being executed. And, for example, the double-tap gesture may be set to be different for each application, according to exemplary embodiments. For example, the double-tap gesture may be set as a reference key event in the terminal. Alternatively, the double-tap gesture may be variously or respectively set by a user of the terminal for each application, for example.

The execution unit 234 may apply, to the application, information suitable for or compatible with the standard that is transferred from the back processing unit 233 and the gesture event that is generated in response to the touch input on the display screen, such as the front display screen, of the terminal, according to exemplary embodiments.

When the application is executed, the activation determining unit 235 may determine whether to activate the back touch recognition unit 231 for recognizing the touch input on the touch recognition area, such as the back touch recognition area, based on whether the application supports a touch on the touch recognition area, such as a back touch on the back touch recognition area, of the terminal. When the application supports the touch, such as the back touch, the activation determining unit 235 may activate the back touch recognition unit 231 in response to execution of the application by the terminal. When the touch recognition, such as the back touch recognition, is activated, the back touch recognition unit 231 may recognize the touch input, such as to the back touch recognition area of the terminal, according to exemplary embodiments.

When the application supports the touch to the touch recognition area, such as the back touch to the back touch recognition area, of the terminal, the execution control unit 236 may control an execution of the application based on at least one of converted touch location information and a gesture event that is determined based on the converted touch location information, for example.

The execution control unit 236 may interpret the converted touch location information as a reference gesture event based on gesture events that are determined and set for each application. For example, the execution control unit 236 may search for the gesture event using a matching table, such as in memory/storage 240, in which converted touch location information and gesture events are matched. Also, for example, for an application that plays music, gesture events matching motions such as play, stop, pause, forward, reward, and the like, for example, may be determined and set for the application, according to exemplary embodiments.

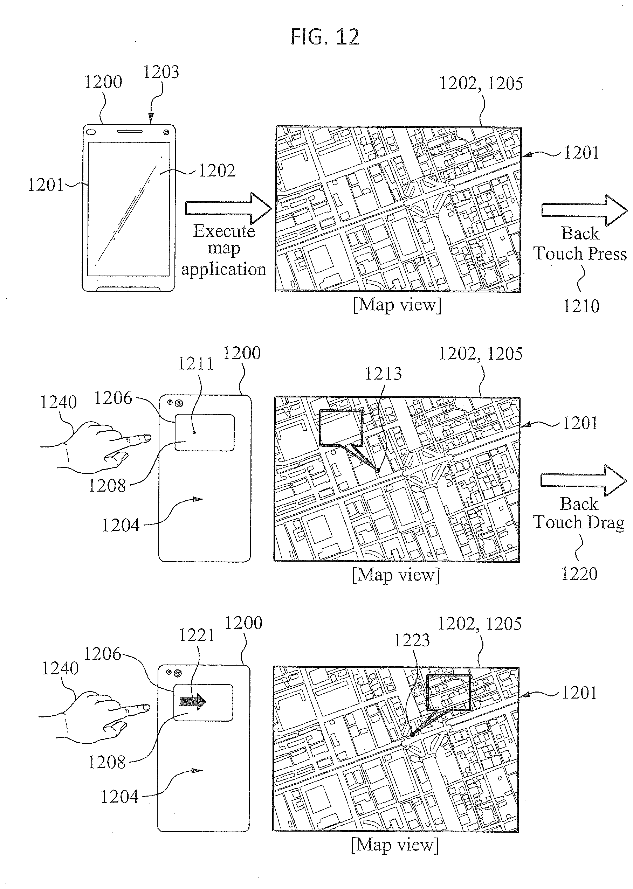

When the application supports the touch to the touch recognition area, such as the back touch to the back touch recognition area, of the terminal, the activation determining unit 235 may activate the back touch recognition unit 231. When the size of the active area is determined to be the same as a size of the display screen, such as the front display screen, by the determining unit 220, the mapping unit 210 may map the touch recognition area, such as the back touch recognition area, on the display screen, such as the front display screen, to have the same size as the size of the display screen, such as the front display screen, for example, according to exemplary embodiments. When a first touch input is recognized by the back touch recognition unit 231, the execution control unit 236 may display, on the display screen, such as the front display screen, an area that is enlarged based on a location at which the first touch input to the touch recognition area, such as the back touch recognition area, of the terminal is performed. When a second touch input to the touch recognition area, such as the back touch recognition area, is recognized by the back touch recognition unit 231, the execution control unit 236 may move the enlarged area along a direction of the second touch input. An example related to a touch input to the touch recognition area, such as the back touch recognition area, being recognized will be further described with reference to FIG. 12, according to exemplary embodiments.

When the application supports the touch to the touch recognition area, such as the back touch to the back touch recognition area, of the terminal, the activation determining unit 235 may activate the back touch recognition unit 231. When the size of the active area is determined by the determining unit 220, the mapping unit 210 may map the touch recognition area, such as the back touch recognition area, based on the size of the active recognition area on the display screen, such as the front display screen. When a first touch input to the touch recognition area, such as the back touch recognition area, of the terminal is recognized by the back touch recognition unit 231, the execution control unit 236 may display, on the display screen, such as the front display screen, the determined active area based on a location at which the first touch input is performed. When a second touch input to the touch recognition area, such as the back touch recognition area, of the terminal is recognized by the back touch recognition unit 231, the execution control unit 236 may move the determined active area on the display screen, such as the front display screen, along a direction of the second touch input. When a third touch input to the touch recognition area, such as the back touch recognition area, of the terminal is recognized by the back touch recognition unit 231, the execution control unit 236 may enlarge an image included in the determined active area of the display screen, such as the front display screen, to be located overall the display screen, such as the front display screen, at a point in time when the third touch input is performed, for example, according to exemplary embodiments.

Regardless of whether the application supports the touch to the touch recognition area, such as the back touch to the back touch recognition area, of the terminal, the activation determining unit 235 may determine whether to activate the back touch recognition unit 231. For example, even though any of various types of applications are executed by the terminal, the activation determining unit 235 may determine to activate the back touch recognition unit 231. Alternatively, regardless of whether the application is executed, the activation determining unit 235 may still activate the back touch recognition unit 231, for example, according to exemplary embodiments.

The execution control unit 236 may determine a gesture event that matches touch location information among gesture events registered to the terminal, and may control an execution of the application based on the determined gesture event. For example, a gesture motion that matches each event may be determined and set in the terminal. The execution control unit 236 may determine a gesture motion based on the touch location information and may retrieve an event that matches the determined gesture motion. And the execution control unit 236 may control an execution or an operation of the application based on the matching event, for example.

When a plurality of applications is executed using multitasking in the terminal, the setting unit 237 may distinguish and thereby determine and set, for each application, an application controlled in response to a touch input on a touch recognition screen, such as a front touch recognition screen, and an application controlled in response to a touch input on the touch recognition area, such as the back touch recognition area, of the terminal, according to exemplary embodiments. For example, a photo edition application may be set to be controlled by the touch input on the front touch recognition screen and a music play application may be set to be controlled by the touch input on the back touch recognition area of the terminal.

The activation determining unit 235 may determine whether to activate at least one of a front touch recognition unit 260 and the back touch recognition unit 231 for each of various categories of applications, for example, according to exemplary embodiments.

The activation determining unit 235 may determine whether to activate the back touch recognition unit 231 based on whether the application is registered to a reference category. When the application is registered to the reference category, the activation determining unit 235 may activate the back touch recognition unit 231. For example, reference categories may be categorized into music, photo, public transport, and the like, for example. Applications that support music may commonly support play, stop, pause, forward, reward, and equalizer operations associated with listening to or playing music, for example. Gesture events that match the respective above operations, such as to play or listen to music, for example, may be determined and set. And the determined gesture event may be recognized by the back touch recognition unit 231, for example, according to exemplary embodiments.

The execution control unit 236 may determine a gesture event that matches touch location information among gesture events registered to the reference category, and may control an execution of the application based on the determined gesture event, for example.

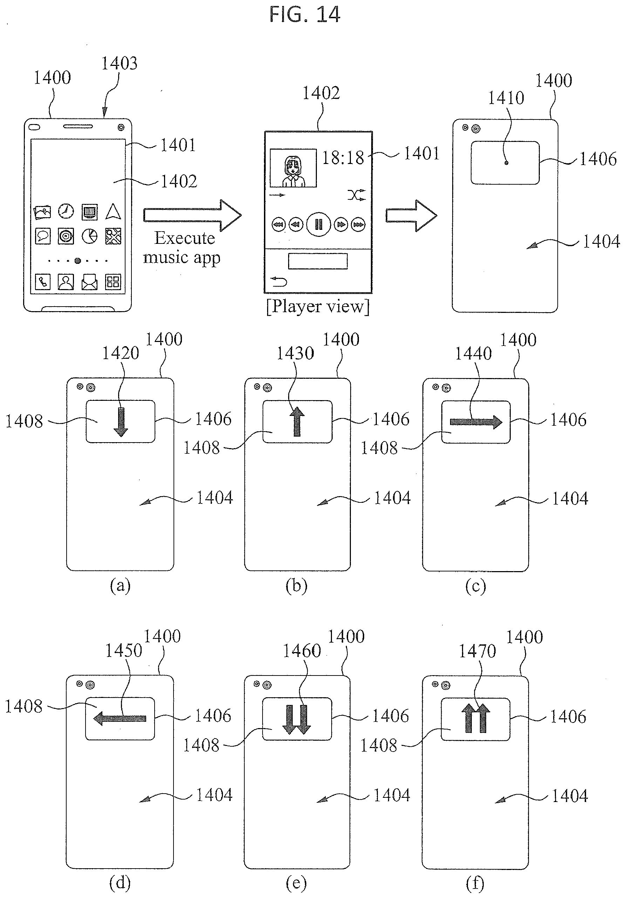

When the application registered to the reference category is executed by the terminal, the activation determining unit 235 may activate the back touch recognition unit 231. The mapping unit 210 may map the back touch recognition area on the front display screen to have, or correspond to, the same size as the size of the front display screen of the terminal. When a first touch input to the touch recognition area, such as the back touch recognition area, of the terminal is recognized by the back touch recognition unit 231, the execution control unit 236 may execute the matching gesture event among the gesture events registered to the reference category, in the application registered to the reference category. An example related to executing the matching gesture event among the gesture events registered to the reference category will be further described with reference to FIG. 14, according to exemplary embodiments.

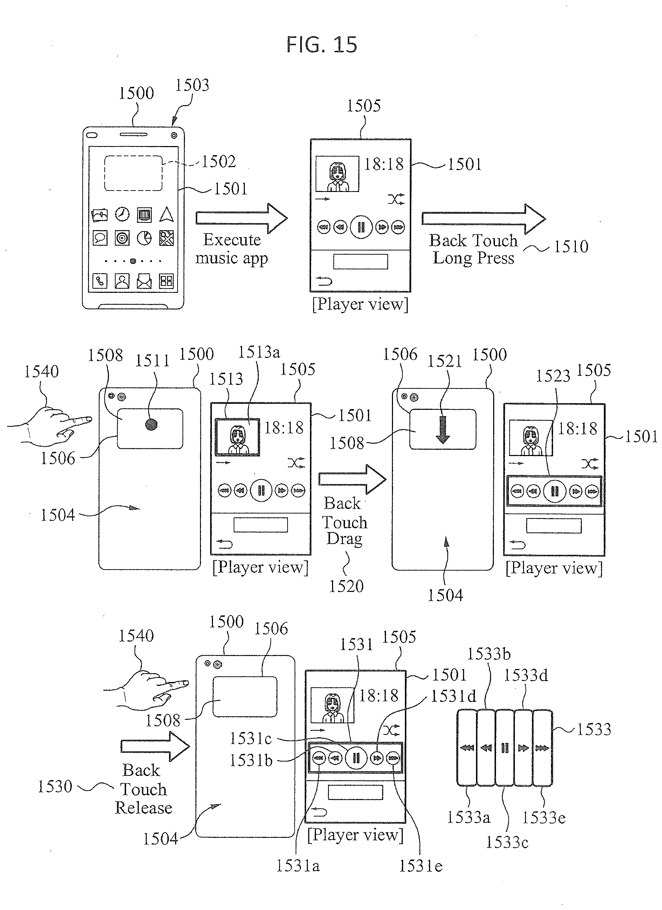

When the application registered to the reference category is executed by the terminal, the activation determining unit 235 may activate the back touch recognition unit 231. When a reference touch input is recognized by the back touch recognition unit 231, the mapping unit 210 may map the touch recognition area, such as the back touch recognition area, of the terminal based on a size of an icon area corresponding to a location at which the reference touch input is performed. When a first touch input to the touch recognition area, such as the back touch recognition area, of the terminal is recognized by the back touch recognition unit 231, the execution control unit 236 may display, on the display screen, such as the front display screen, of the terminal, an icon corresponding to a location at which a first touch input is performed. When a second touch input to the touch recognition area, such as the back touch recognition area, of the terminal is recognized by the back touch recognition unit 231, the execution control unit 236 may execute the matching gesture event among the gesture events registered to the reference category in the application registered to the reference category on an icon area corresponding to a location at which the second touch input is performed. An example related to executing the matching gesture event among the gesture events registered to the reference category in the application registered to the reference category will be further described with reference to FIG. 15, according to exemplary embodiments.

FIG. 3, including images (a), (b) and (c) of FIG. 3, is a diagram to illustrate a mapping process in an apparatus to control a terminal using a touch on a surface of a terminal, such as on a back of the terminal, according to exemplary embodiments of the present invention.

Referring to FIG. 3, when the terminal controlling apparatus, such as terminal controlling apparatus 100 or terminal controlling apparatus 200, maps a touch recognition area on a first surface of a terminal, such as maps a back touch pad area 320, as a back touch recognition area 320a located on the back touch pad 321 on the back 302 of the terminal 300, on or to a an active area on a second surface of a terminal, such as on or to a front display screen 310 of a display 303 on a front of the terminal 300, active areas 331 or 333 on the front display screen 310 desired by a user may be mapped, for example, based on the following conditions, such as illustrated with reference to the exemplary images (a), (b) and (c) of FIG. 3. The back touch pad area 320 as the back touch recognition area 320a located on the back touch pad 321 may be located on a first surface of the terminal such as on the back 302 of the terminal 300, and the front display screen 310 may be located on a second surface of the terminal, such as on the front 301 of the terminal 300, for example. And the touch recognition area, such as back touch recognition area 320a, may be equal to or less than all of the touch pad area, such as back touch pad area 320 of the back touch pad 321, for example, according to exemplary embodiments, such that a remaining portion of the touch pad, such as a remaining portion of the back touch pad 321, may receive inputs associated with dedicated or programmed operations. Image (a) of FIG. 3 illustrates mapping of the back touch pad area 320 as the back touch recognition area 320a, located on the back touch pad 321, on or to the active areas 331 or 333 on the front display screen 310. Image (b) of FIG. 3 corresponds to the front display screen 310 of the terminal 300. And image (c) of FIG. 3 corresponds to the back touch pad area 320, such as may correspond to the back touch recognition area 320a, located on the back touch pad 321 of the terminal 300.

Referring to images (a), (b) and (c) of FIG. 3, a first condition relates to a size of an active area of the display screen, such as front display screen 310.

When a size of the active area 331 in image (a) in FIG. 3 is "A (width) x B (height)", and the size of the touch pad area as a touch recognition area, such as back touch pad area 320 as the back touch recognition area 320a, is "a (width) x b (height)", mapping may be performed based on "A = α x a and B = β x b". And a value of α may be calculated or determined through scale comparison between A and a, and a value of β may be calculated or determined through scale comparison between B and b. And in an example of mapping the touch recognition area, such as the back touch recognition area 320a, on or to active area, such as active area 331 or active area 333 on or to the front display screen 310, "a" may correspond to a length of an axis x and "b" corresponds to a length of an axis y of the touch recognition area, such as the back touch recognition area 320a, such as may correspond to back touch pad area 320, and "A" may correspond to a length of an axis x and "B" may correspond to a length of an axis y of the active area, such as active 331 on the front display screen 310, for example, according to exemplary embodiments.

Continuing with reference to images (a), (b) and (c) of FIG. 3, a second condition relates to a location of an active area, such as active area 331 or active area 333, of a display screen, such as of the front display screen 310.

A location of an active area 331 or active area 333 to be displayed on the front display screen 310 may be determined as a location of the active area 331 or a location of the active area 333, for example. Even though two examples of the active area are illustrated and described as an example in FIG. 3, the active area may be positioned at any of various locations on the display screen, such as the front display screen 310, according to exemplary embodiments.

The size and the location of the active area, such as active area 331 or active area 333, may be determined and set using a user interface of the terminal 300 such as from a user of the terminal 300, and may be determined and set based on an operation or an application to be executed by the terminal 300, for example, according to exemplary embodiments.

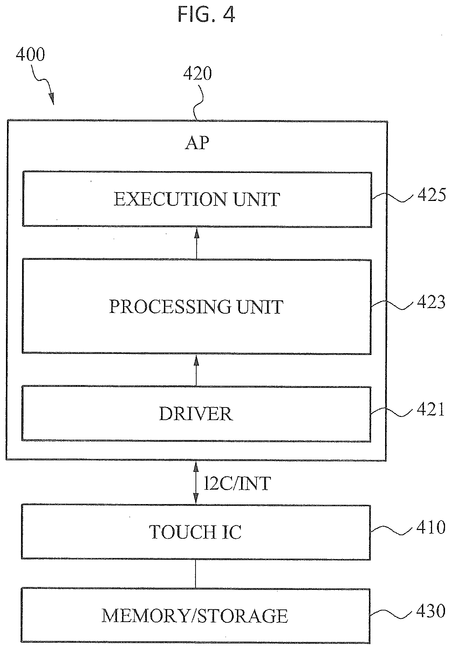

FIG. 4 is a block diagram illustrating an apparatus to control a terminal, such as terminal 300 of FIG. 3, using a touch on a surface of the terminal, such as on a back of the terminal, according to exemplary embodiments of the present invention.

Referring to FIG. 4, the terminal controlling apparatus 400 may include a touch IC 410 and an application processor (AP) 420, for example, according to exemplary embodiments.

The touch IC 410 may recognize a touch input on a touch pad that is positioned on a surface of the terminal, such as on the back of the terminal. When the touch input on touch pad, such as the back touch pad, is recognized, the touch IC 410 may generate an interrupt. The touch IC 410 may store, in a memory, such as memory/storage 430, a touch location tossed by a touch sensor of the touch IC 410 and a key event corresponding to the touch input, for example. And the touch location may indicate coordinates of the touch location or an index of the touched touch sensor, for example, according to exemplary embodiments.

The AP 420 may generate a gesture event by interpreting the touch location that is obtained via the touch IC 410, and may apply the generated gesture event to an application to be executed by the terminal, such as terminal 300.

The AP 420 may include a driver 421, a processing unit 423, and an execution unit 425, according to exemplary embodiments of the invention. When the interrupt generated by the touch IC 410 is recognized, the driver 421 may verify, from a reference address of the memory/storage 430, information such as coordinates of the touch location, the key event, and the like, using an 12C, for example. The driver 421 may transfer, to the processing unit 423, the verified information such as the coordinates of the touch location, the key event, and the like, for example. Alternatively, the driver 421 may transfer, to the processing unit 423, coordinates that map an active area of the display screen, such as the front display screen, of the terminal.

Based on information that is transferred from the driver 421, the processing unit 423 may identify whether the touch input is a volume-up key event or simple touch information, for example, such as a scroll to up, down, left, and right, a tap, and the like, for example. The processing unit 423 may process and pack the information to be in a format suitable for or compatible with a standard of an OS of the terminal, such as the terminal 300, and may transfer the processed and packed information to the execution unit 425. During the above processing and packing process, an ID of the touch pad, such as the back touch pad, coordinates of the touched location, a gesture, a key event, and the like, may be included in the processed and packed information, for example according to exemplary embodiments.

The execution unit 425 may apply the transferred information to various applications to be executed on the terminal, such as the terminal 300, such as a game and the like, for example. The execution unit 425 may enable only a scroll motion in a reference application among the various applications and enable a portion of or all of gesture events such as a tap, a double tap, and the like, to not be operated, for example.

According to exemplary embodiments, the terminal controlling apparatus 400 may ignore a touch motion, such as a back touch motion using a back touch pad when a touch is performed using a display screen, such as a front display screen of the terminal, for example.

According to exemplary embodiments, the terminal controlling apparatus 400 may execute a toggle function of enlarging or reducing a display screen, such as a front display screen, of the terminal using a double tap function on a back of the terminal, or may enable a self-camera operation in a reference application for execution by the terminal.

Also, various gesture events may be determined and set by a user of the terminal to be suitable for or compatible with an application to be executed by the terminal, such as the terminal 300, and implemented by the terminal controlling apparatus 400, according to exemplary embodiments.

According to exemplary embodiments, when multitasking, for example, web surfing while listening to music, the terminal controlling apparatus 400 may set a scroll and screen switching required for operation of a web browser to be processed in response to a touch input on a display screen, such as a front display screen. And the terminal controlling apparatus 400 may set an activation and location movement of a widget of a music player to be processed in response to a touch input on a touch pad, such as a back touch pad, of the terminal, for example.

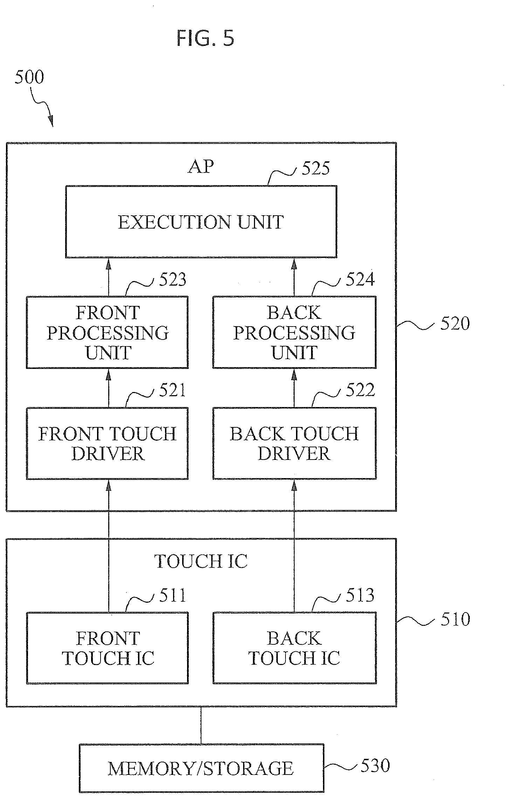

FIG. 5 is a block diagram illustrating an apparatus to control a terminal, such as the terminal 300 of FIG. 3, using a touch on a surface of the terminal, such as on a back of the terminal, according to exemplary embodiments of the present invention.

Referring to FIG. 5, the terminal controlling apparatus 500 may include a touch IC 510 and an AP 520, according to exemplary embodiments.

Also, according to exemplary embodiments, the terminal controlling apparatus 500 may have an information processing structure for each of first and second surfaces of a terminal, such as for each of a front and a back of a terminal, in order to enable identifying where touch information is input and processed between the first and second surfaces of the terminal, such as between the front and the back of the terminal, for example.

Further, according to exemplary embodiments, the terminal controlling apparatus 500 may have various structures or implementations, such as by differently setting an operation of generating a gesture event, for example.

The touch IC 510 of the terminal controlling apparatus 500 may include a front touch IC 511 and a back touch IC 513.

The front touch IC 511 may recognize a touch input on a display screen, such as a front display screen, of the terminal, such as the front display screen 310 of the terminal 300. When the touch input is recognized to the display screen, such to the front display screen, the front touch IC 511 may generate an interrupt. The front touch IC 511 may store coordinates of the recognized touch input in a memory, such as memory/storage 530, for example, according to exemplary embodiments.

The back touch IC 513 may recognize a touch input on a touch pad, such as a back touch pad, such as to the touch recognition area as, for example, to the back touch recognition area. When the touch input to the touch pad, such as to the back touch pad, is recognized, the back touch IC 513 may generate an interrupt. The back touch IC 513 may store coordinates of the recognized touch input in the memory, such as memory/storage 530.

The AP 520 of the terminal controlling apparatus 500 may include a front touch driver 521, a back touch driver 522, a front processing unit 523, a back processing unit 524, and an execution unit 525, for example, according to exemplary embodiments.

When the interrupt generated by the front touch IC 511 is recognized, the front touch driver 521 may verify coordinates of the touch input to the display screen, such as the front touch input to the front display screen, from the memory, such as memory/storage 530, and may transfer the coordinates of the touch input to the front processing unit 523. The front processing unit 523 may generate a gesture event based on the coordinates of the touch input to the display screen, such as the front display screen, and may transfer the gesture event to the execution unit 525, according to exemplary embodiments.

When the interrupt generated by the back touch IC 513 is recognized, the back touch driver 522 may verify coordinates of the touch input to the touch pad, such as the back touch input to the back touch pad, such as to the touch recognition area as, for example, to the back touch recognition area, from the memory and may transfer, to the back processing unit 524, coordinates of converted touch input that is converted to a location corresponding to a size of an active area on the display screen, such as the front display screen, for example.

The back processing unit 524 may generate a gesture event based on the coordinates of the converted touch input, may process and pack the gesture event and the coordinates of the converted touch input, and may transfer the processed and packed gesture event and coordinates to the execution unit 525, according to exemplary embodiments.

The execution unit 525 may reset or generate, and thereby use, an event based on the transferred information from the front processing unit 523 or from the back processing unit 524. Based on whether the gesture event is transferred from the front processing unit 523 or the back processing unit 524, the execution unit 525 may determine, such as between the front and the back of the terminal, where to apply the gesture event to the application being executed by the terminal, such as by the terminal 300, for example.

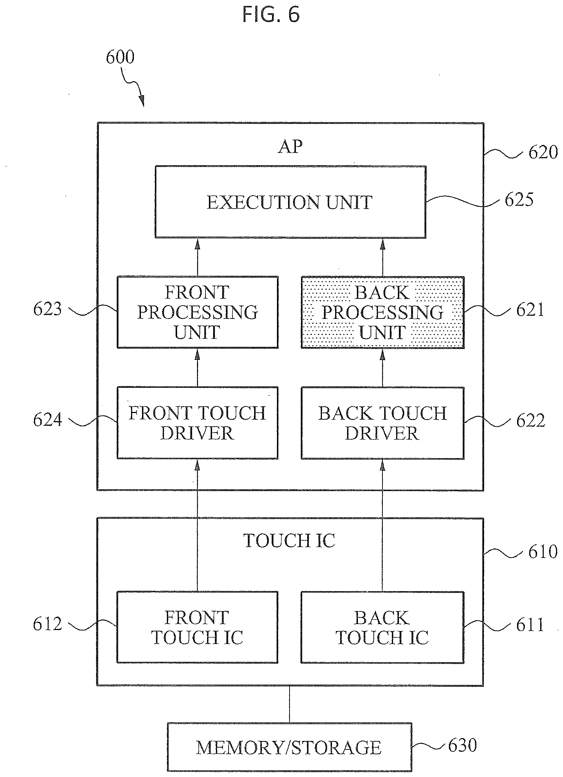

FIG. 6, FIG. 7 and FIG. 8 are block diagrams to illustrate examples of employing apparatus to control a terminal, such as terminal 300 of FIG. 3, using a touch on a surface of the terminal, such as on a back of the terminal, according to exemplary embodiments of the present invention. In FIG. 6, FIG. 7 and FIG. 8, the "hatched" blocks, such as the back processing unit 621, the back touch driver 721 and the back touch IC 811, may generate a gesture event, for example, according to exemplary embodiments.

Referring to FIG. 6, a terminal controlling apparatus 600 to control a terminal, such as the terminal 300, using a touch on a surface of a terminal, such as on a back of the terminal, according to exemplary embodiments, may include a touch IC 610 and an AP 620. The touch IC 610 may include a back touch IC 611 and a front touch IC 612. The AP 620 may include the back processing unit 621, a back touch driver 622, a front processing unit 623, a front touch driver 624 and an execution unit 625. And the touch IC 610 and the AP 620 may be associated with a memory/storage 630. The operation and description of these components, modules or units of the terminal controlling apparatus 600 are similar to those corresponding components, modules or units described with respect to the terminal controlling apparatus 500 of FIG. 5, except as may be otherwise indicated or described herein, according to exemplary embodiments.

The back processing unit 621 of the AP 620 may generate a gesture event based on coordinates of a touch location in touch recognition area, such as the back touch recognition area, that are transferred from the back touch driver 622, for example, according to exemplary embodiments.

When coordinates of the touch location are received through the back touch IC 611 and the back touch driver 622, the back processing unit 621 may generate the gesture event based on coordinates of a converted touch location that is converted to a location corresponding to a size of an active area on the display screen, such as the front display screen, of the terminal, for example, according to exemplary embodiments.

The back processing unit 621 may receive coordinates of the converted touch location from one of the back touch IC 611 and the back touch driver 622, and may generate the gesture event based on the coordinates of the converted touch location, for example, according to exemplary embodiments.

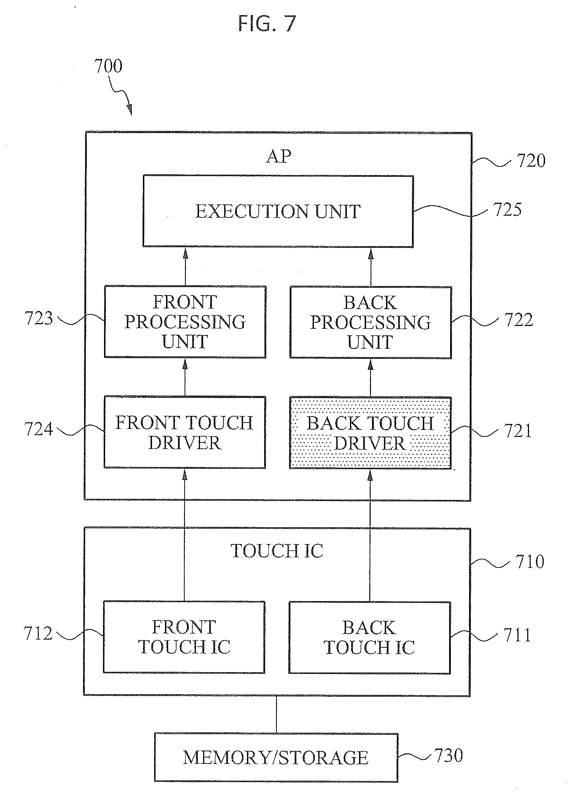

Referring to FIG. 7, a terminal controlling apparatus 700 to control a terminal, such as the terminal 300 of FIG. 3, using a touch on a surface of a terminal, such as on a back of the terminal, according to exemplary embodiments may include a touch IC 710 and an AP 720. The touch IC 710 may include a back touch IC 711 and a front touch IC 712. The AP 720 may include a back processing unit 722, the back touch driver 721, a front processing unit 723, a front touch driver 724 and an execution unit 725. And the touch IC 710 and the AP 720 may be associated with a memory/storage 730. The operation and description of these components, modules or units of the terminal controlling apparatus 700 are similar to those corresponding components, modules or units described with respect to the terminal controlling apparatus 500 of FIG. 5, except as may be otherwise indicated or described herein, according to exemplary embodiments.

The back touch driver 721 of the terminal controlling apparatus 700 may generate a gesture event based on coordinates of a touch location that are transferred from the back touch IC 711, for example, according to exemplary embodiments.

When coordinates of the touch location are received from the back touch IC 711, the back touch driver 721 may generate the gesture event based on coordinates of a converted touch location that is converted to a location corresponding to a size of an active area on the display screen, such as the front display screen, of the terminal, for example.

The back touch driver 721 may receive coordinates of the converted touch location from the back touch IC 711 and may generate the gesture event based on the coordinates of the converted touch location, for example, according to exemplary embodiments.

Also, the back processing unit 722 may pack the coordinates of the converted touch location, the touch event, and an ID of a touch pad that includes the touch recognition area, such as a back touch pad that includes the back touch recognition area, of the terminal, and may transfer the packed coordinates, touch event, and ID to the execution unit 725, for example, according to exemplary embodiments.

The front touch driver 724 may transfer touched coordinates on a display screen, such as a front display screen, to the front processing unit 723. The front processing unit 723 may generate a gesture event based on the touched coordinates, and may pack the touched coordinates and the gesture event and transfer the packed touched coordinates and gesture event to the execution unit 725, for example, according to exemplary embodiments.

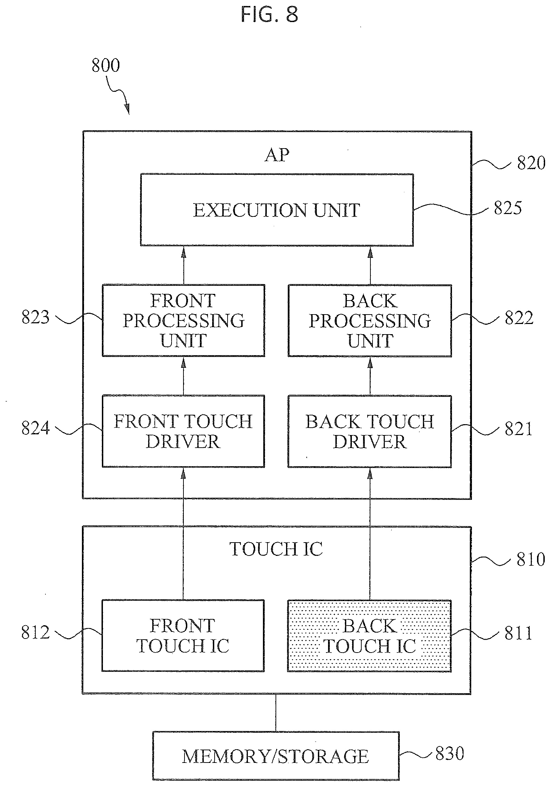

Referring to FIG. 8, a terminal controlling apparatus 800 to control a terminal, such as the terminal 300 of FIG. 3, using a touch on surface of the terminal, such as a touch on a back of the terminal, according to exemplary embodiments may include a touch IC 810 and an AP 820. The touch IC 810 may include the back touch IC 811 and a front touch IC 812. The AP 820 may include a back processing unit 822, a back touch driver 821, a front processing unit 823, a front touch driver 824 and an execution unit 825. And the touch IC 810 and the AP 820 may be associated with a memory/storage 830. The operation and description of these components, modules or units of the terminal controlling apparatus 800 are similar to those corresponding components, modules or units described with respect to the terminal controlling apparatus 500 of FIG. 5, except as may be otherwise indicated or described herein, according to exemplary embodiments.

The back touch IC 811 of the terminal controlling apparatus 800 may generate a gesture event based on coordinates of a recognized touch location such as in a touch recognition area as, for example, the back touch recognition area, of the terminal, according to exemplary embodiments.

The back touch IC 811 may also generate the gesture event from coordinates of a converted touch location that is converted to a location corresponding to a size of an active area on the display screen, such as the front display screen, of the terminal, for example.

The front touch IC 812 may recognize a touch input on a display screen, such as a front display screen, and may transfer touched coordinates to the front touch driver 824. The front touch driver 824 may transfer the touched coordinates on the display screen, such as the front display screen, to the front processing unit 823. The front processing unit 823 may generate the gesture event based on the touched coordinates, may pack the touched coordinates and the gesture event, and may transfer the packed touched coordinates and gesture event to the execution unit 825, for example, according to exemplary embodiments.

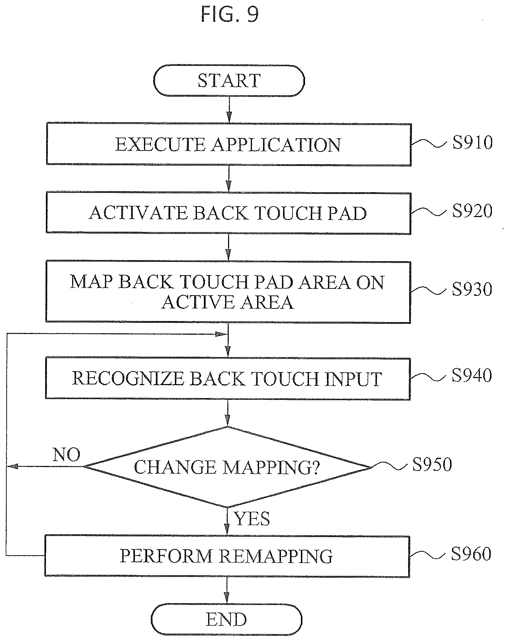

FIG. 9 is a flowchart illustrating a method for controlling a terminal, such as the terminal 300 of FIG. 3, using a touch on a surface of the terminal, such as a touch on a back of the terminal, according to exemplary embodiments of the present invention.

Referring to FIG. 9, in operation S910, the terminal may execute an application that supports a touch recognition, such as a back touch recognition. The application may be executed by a user or automatically by the terminal in interaction with another program, for example.

In operation S920, the terminal controlling apparatus, such as the terminal controlling apparatus 200 or the terminal controlling apparatus 500, for example, using a touch on a surface of the terminal, such as on a back of the terminal, according to exemplary embodiments, may activate a touch pad, such as a back touch pad, when the application that supports the touch recognition, such as the back touch recognition, is executed by the terminal. In operation S930, the terminal controlling apparatus may map a touch pad area, such as a back touch pad area, on or to an active area of the display screen, such as the front display screen, of the terminal. The terminal controlling apparatus may perform mapping by comparing a size of the touch pad area, such as the back touch pad area, and a size of the active area on the display screen, such as on the front display screen, of the terminal, for example. Alternatively, the size of the active area on the display screen, such as on the front display screen, of the terminal may not be fixed and, instead, be selectively determined within a size range supported by a display screen, such as a front display screen, of the terminal. And, for example, a location of the active area on the display screen, such as the front display screen of the terminal, may be determined and set for each application to be executed by the terminal.

In operation S940, the terminal controlling apparatus may recognize a touch input using a touch pad, such as a back touch input using the back touch pad, of the terminal. The terminal controlling apparatus may apply, to the application, converted touch location information that is converted to a location corresponding to the size of the active area on the display screen, such as the front display screen, and a gesture event. And the converted touch location information may match various gesture events for each application. For example, the same converted touch location information may match a first gesture event in one application and may match a second gesture event in another application, according to exemplary embodiments.

In operation S950, the terminal controlling apparatus may determine whether to change mapping while the application is being executed by the terminal. The terminal controlling apparatus may determine whether to perform mapping or change mapping in response to a user request or based on a reference criterion of the terminal, for example. If it is determined not to change mapping, the process returns to operation S940.

In operation S960, the terminal controlling apparatus may remap the touch pad area corresponding to the touch recognition area, such as the back touch pad area corresponding to the back touch recognition area, on a newly determined active area on the display screen, such as the front display screen, of the terminal, for example, according to exemplary embodiments. The process then returns to operation S940.

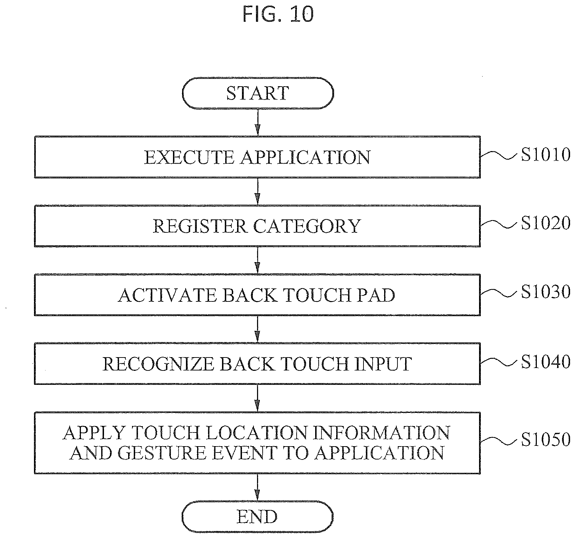

FIG. 10 is a flowchart illustrating a method for controlling a terminal using a touch on a surface of the terminal, such as on a back of the terminal, according to exemplary embodiments of the present invention.

Referring to FIG. 10, in operation S1010, the terminal, such as the terminal 300 of FIG. 3, may execute an application. The application may be executed by a user or automatically by the terminal in interaction with another program, for example, according to exemplary embodiments.

In operation S1020, a terminal controlling apparatus, such as the terminal controlling apparatus 200 or the terminal controlling apparatus 500, for example, using a touch on a surface of the terminal, such as a touch on a back of the terminal, according to exemplary embodiments, may register a category of the application to a category of the terminal. The category of the application may be determined based on content of the application. For example, categories such as music, photo, traffic, and the like, may be determined. A gesture event corresponding to a touch input on a touch pad, such as a back touch pad, may be determined and set for each category of the terminal. For example, a music play application may perform similar operations such as play, pause, rewind, fast forward, and the like. Accordingly, gesture events, which match play, pause, rewind, fast forward, and the like, respectively, may be determined and set for the music play category, for example, according to exemplary embodiments.

In operation S1030, the terminal controlling apparatus may activate a touch pad of the terminal, such as a back touch pad of the terminal, when the category of the application is included as a category set in the terminal.

In operation S1040, the terminal controlling apparatus may recognize a touch input to the touch recognition area, using a touch pad on a surface of the terminal, such as a back touch input to the back touch recognition area, using the back touch pad of the terminal, for example.

In operation S1050, the terminal controlling apparatus may apply touch location information and the gesture event to the application being executed by the terminal. The gesture event may be determined and set for each category. The terminal controlling apparatus may search for the gesture event that matches the touch location information. When the application of the category in which the gesture event is set is executed by the terminal, the gesture event corresponding to the touch input, such as the back touch input, may be applied to the application, for example, according to exemplary embodiments.

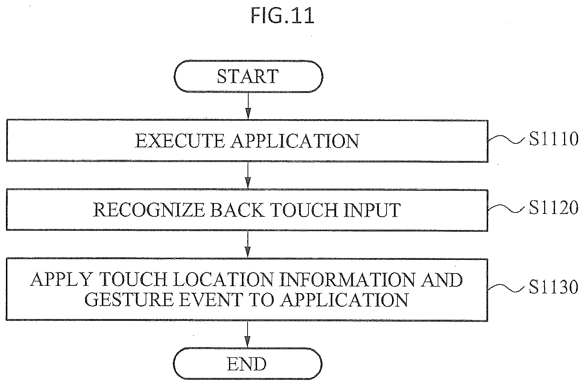

FIG. 11 is a flowchart illustrating a method for controlling a terminal using a touch on a surface of a terminal, such as using a touch on a back of the terminal, according to exemplary embodiments of the present invention.

Referring to FIG. 11, in operation S1110, the terminal, such as the terminal 300 of FIG. 3, may execute an application. The application may be executed by a user or automatically by the terminal in interaction with another program, for example, according to exemplary embodiments.

In operation S1120, regardless of whether the executed application supports a touch input, such as a back touch input, a terminal controlling apparatus, such as the terminal controlling apparatus 200 or the terminal controlling apparatus 500, for example, to control a terminal using a touch on a surface of the terminal, such as on a back of the terminal, according to exemplary embodiments may activate a touch pad, such as a back touch pad, of the terminal. When the touch pad, such as the back touch pad, of the terminal is activated, the terminal controlling apparatus may recognize the touch input to the touch recognition area, such as the back touch input to the back touch recognition area, using the activated touch pad, such as the back touch pad, of the terminal, for example, according to exemplary embodiments.

In operation S1130, the terminal controlling apparatus may apply touch location information and a gesture event to the application being executed by the terminal. The gesture event may be determined or set as a basic setting. The basic gesture setting may include gesture events such as flicking, scroll, enlargement and reduction, and the like, for example. The basic gesture setting may be modified by a user and additionally include new gesture events, for example, according to exemplary embodiments.

FIG. 12, FIG. 13, FIG. 14 and FIG. 15 are diagrams illustrating examples of employing methods for controlling a terminal using a touch on surface of the terminal, such as a touch on a back of the terminal, according to exemplary embodiments of the present invention.

FIG. 12 illustrates an example in which an application supports a touch input, such as a back touch input, and an area of a touch pad, such as a back touch pad, is mapped overall on or to a display screen, such as a front display screen, of the terminal, according to exemplary embodiments. FIG. 12 illustrates a terminal 1200, such as the terminal 300 of FIG. 3, and the terminal 1200 includes a terminal controlling apparatus, such as the terminal controlling apparatus 200 of FIG. 2 or the terminal controlling apparatus 500 of FIG. 5, for example, to control the terminal 1200 using a touch on a first surface of a terminal 1200, such as on a back 1204 of the terminal 1200. The terminal 1200 includes a display screen on a second surface of the terminal 1200, such as front display screen 1201 on a front 1203 of the terminal 1200, and includes a touch pad including a touch recognition area on the first surface of the terminal 1200, such as back touch pad 1206 including a back touch recognition area 1208 on the back 1204 of the terminal 1200. And FIG. 12 illustrates an example in which an active area 1202 corresponds to the overall display screen, such as the front display screen 1201 of the terminal 1200.

Referring to FIG. 12, a map application is executed in the terminal 1200, for example. A map view 1205 is displayed on the front display screen 1201. A back touch press 1210 may be input by a user 1240 of the terminal 1200 using the back touch pad 1206. A location 1211 indicates a point at which the back touch press 1210 is performed on the back touch pad 1206. The location 1211 may be mapped on or to the front display screen 1201 and thereby be displayed as a location 1213 on the map view 1205 displayed on the front display screen 1201 in the active area 1202, for example, according to exemplary embodiments.

A back touch drag 1220 may be input by the user 1240 using the back touch pad 1206. An arrow indicator 1221 indicates the back touch drag 1220 and a direction of the back touch drag 1220 on the back touch pad 1206. In response to the back touch drag 1220, the location 1213 may be moved to a location 1223 on the map view 1205 displayed on the front display screen 1201 in the active area 1202, for example, according to exemplary embodiments.

Even though only gesture events of a press and a drag are described with reference to the map application in the example illustration of FIG. 12, various other gesture events such as flicking, a scroll, a tap, a double tap, and the like, may be included and implemented, such as by the terminal controlling apparatus of terminal 1200. For example; the map view 1205 may be moved using a drag and operations that match the various gesture events, as may be respectively determined and set. And the determined and set operations that match the gesture events may be used in execution of an application, such as the map application illustrated with reference to FIG. 12, according to exemplary embodiments.

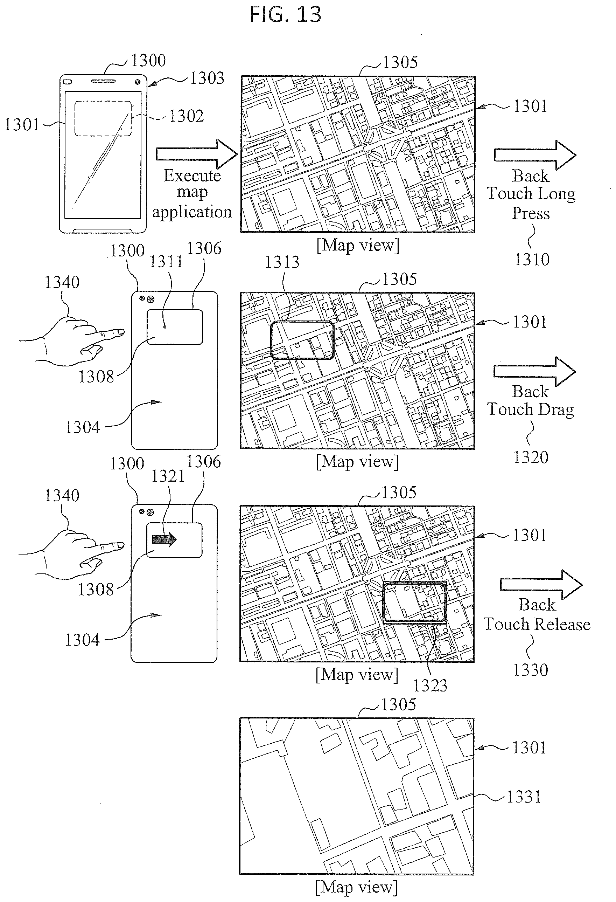

FIG. 13 illustrates an example in which an application supports a touch input, such as a back touch input, and an area of a touch pad, such as an area of a back touch pad, is mapped on or to a portion of a display screen, such as a front display screen on a front of the terminal. FIG. 13 illustrates a terminal 1300, such as the terminal 300 of FIG. 3, and the terminal 1300 includes a terminal controlling apparatus, such as the terminal controlling apparatus 200 of FIG. 2 or the terminal controlling apparatus 500 of FIG. 5, for example, to control the terminal 1300 using a touch on a back 1304 of the terminal 1300. The terminal 1300 includes a display screen on a second surface of the terminal 1300, such as a front display screen 1301 on a front 1303 of the terminal 1300, and includes a touch pad including a touch recognition area on a first surface of the terminal 1300, such as a back touch pad 1306 including a back touch recognition area 1308 on the back 1304 of the terminal 1300. And FIG. 13 illustrates an example in which an active area 1302 corresponds to a portion of the display screen, such as the front display screen 1301 on the front 1303 of the terminal 1300.

Referring to FIG. 13, a map application is executed in the terminal 1300. A map view 1305 is displayed on the front display screen 1301. A back touch and long press 1310 may be input by a user 1340 using the back touch pad 1306. A location 1311 indicates a point at which the back touch and long press 1310 is performed on the back touch pad 1306. The location 1311 may be mapped on the front display screen 1301 and thereby be displayed as an active area 1313 on the map view 1305. For example, when the back touch and long press 1310 is performed on the back touch pad 1306, the active area 1313 suitable for or compatible with a location of a finger of the user 1340 on the map view 1305 may be selected by the user 1340 of the terminal 1300, for example, according to exemplary embodiments.

In addition to the back touch and long press 1310, the active area 1313 may be selected by employing various schemes based on the application being executed by the terminal 1300. For example, when an operation at about the same time together with a reference button of the terminal 1300 being pressed by the user 1340, such as an operation of selecting an area when the reference button is pressed, and changing a location in response to an input on the back touch pad 1306, or a reference gesture occurs, the active area, such as active area 1302, may be selected by the user 1340, according to exemplary embodiments.

Also, for example, a size of the active area 1302, such as may correspond to active area 1313, may be set in the application being executed, such as in the map application described with reference to FIG. 13. The size of the active area 1313 may be adjusted using a connecting operation with another button of the terminal 1300 or a gesture, for example. And the size and the location of the active area 1313 may be determined and respectively set for each application, according to exemplary embodiments.

As illustrated in FIG. 13, a back touch drag 1320 may be input using the back touch pad 1306. An arrow indicator 1321 indicates the back touch drag 1320 and a direction of the back touch drag 1320 on the back touch pad 1306, for example. In response to the back touch drag 1320, the location of the active area 1313 may be moved to a location of an active area 1323 in the map view 1305 on the front display screen 1301 of the terminal 1300, according to exemplary embodiments.

Also, a back touch and release 1330 may be input using the back touch pad 1306. The active area 1323 corresponding to a location at which the back touch and release 1330 is performed may be enlarged whereby an enlarged image 1331 may be displayed on the map view 1305 on the front display screen 1301 of the terminal 1300, according to exemplary embodiments.

When a user 1340's finger moves on the back touch pad 1306, the selected active area 1313 may also move along corresponding to the movement of the finger. When the finger is released from the back touch pad 1306, the active area 1323 of the corresponding release point may be enlarged, such as illustrated by the enlarged image 1331 in the map view 1305, for example, according to exemplary embodiments.

Even though only gesture events of a long press, a drag, and release are described in the map application in the example illustration of FIG. 13, various gesture events such as flicking, a scroll, a tap, a double tap, and the like may be included and implemented, such as by the terminal controlling apparatus of terminal 1300. For example, the map view 1305 may be moved using a drag and operations that match the various gesture events, as may be respectively determined and set. And the determined and set operations that match the gesture events may be used in execution of an application, such as the map application illustrated with reference to FIG. 13, according to exemplary embodiments.

FIG. 14, including images (a) - (f), illustrates an example in which a category of an application belongs to a category set in a terminal, and an area of touch pad, such as a back touch pad, is mapped overall on or to a display screen, such as a front display screen, of the terminal, according to exemplary embodiments. FIG. 14 illustrates a terminal 1400, such as the terminal 300 of FIG. 3, and the terminal 1400 includes a terminal controlling apparatus, such as the terminal controlling apparatus 200 of FIG. 2 or the terminal controlling apparatus 500 of FIG. 5, for example, to control the terminal 1400 using a touch on a first surface of the terminal 1400, such as a touch on a back 1404 of the terminal 1400. The terminal 1400 includes a display screen on a second surface of the terminal 1400, such as a front display screen 1401 on a front 1403 of the terminal 1400. Also, the terminal 1400 includes a touch pad including a touch recognition area on a first surface of the terminal 1400, such as a back touch pad 1406 including a back touch recognition area 1408 on the back 1404 of the terminal 1400. And FIG. 14 illustrates an example in which an active area 1402 corresponds to the entire display screen, such as the front display screen 1401 of the terminal 1400. Referring to FIG. 14, a music application is executed in a terminal 1400, for example. And a music player is displayed on the front display screen 1401 of the terminal 1400, for example.

A tap 1410 may be input using the back touch pad 1406. And in response to the tap 1410 on the back touch pad 1406, the music application being executed by the terminal 1400 may play, or pause, music being played by the terminal 1400, for example.

As illustrated in image (a) of FIG. 14, an up-to-down drag 1420 may be input using the back touch pad 1406, and, in response to the up-to-down drag 1420, the music application may play a previous song, for example. Also, as illustrated in image (b) of FIG. 14, a down-to-up drag 1430 may be input using the back touch pad 1406, and, in response to the down-to-up drag 1430, the music application may play a subsequent song, for example.

Further, as illustrated in image (c) of FIG. 14, a left-to-right drag 1440 may be input using the back touch pad 1406, and, in response to the left-to-right drag 1440, the music application may rewind the music being played, for example Also, as illustrated in image (d) of FIG. 14, a right-to-left drag 1450 may be input using the back touch pad 1406, and, in response to the right-to-left drag 1450, the music application may fast forward the music being played, for example.

And, as illustrated in image (e) of FIG. 14, two up-to-down drags 1460 may be input using two fingers on the back touch pad 1406, and, in response to the two up-to-down drags 1460, the music application may decrease a volume of the music being played, for example. Also, as illustrated in image (f) of FIG. 14, two down-to-up drags 1470 may be input using two fingers on the back touch pad 1406, and, in response to the two down-to-up drags 1470, the music application may increase a volume of the music being played, for example, according to exemplary embodiments.

Even though only gesture events of a tap and a drag are described with reference to the music application of FIG. 14, various gesture events such as flicking, a scroll, a tap, a double tap, and the like, may be included and implemented, such as by the terminal controlling apparatus of terminal 1400. Also, operations that match the various gesture events may be respectively determined and set. And the determined and set operations that match the gesture events may be used in execution of an application, such as the music application illustrated with reference to FIG. 14, according to exemplary embodiments.

FIG. 15 illustrates an example in which a category of an application belongs to a category set in a terminal, and an area of a touch pad, such as a back touch pad, on a first surface of a terminal is mapped on or to a portion of display screen on a second surface of the terminal, such as a front display screen on a front of a terminal. FIG. 15 illustrates a terminal 1500, such as the terminal 300 of FIG. 3, and the terminal 1500 includes a terminal controlling apparatus, such as the terminal controlling apparatus 200 of FIG. 2 or the terminal controlling apparatus 500 of FIG. 5, for example, to control the terminal 1500 using a touch on a surface of the terminal 1500, such as on a back 1504 of the terminal 1500. The terminal 1500 includes a display screen on the second surface of the terminal, such as a front display screen 1501 on a front 1503 of the terminal 1500. The terminal 1500 includes a touch pad including a touch recognition area on the first surface of the terminal 1500, such as a back touch pad 1506 including a back touch recognition area 1508 on the back 1504 of the terminal 1500. And FIG. 15 illustrates an example in which an active area 1502 corresponds to a portion of the display screen, such as the front display screen 1501. Referring to FIG. 15, a music application is executed in the terminal 1500, for example, and a music player in a player view 1505 is displayed on the front display screen 1501.

A back touch and long press 1510 may be input by a user 1540 of the terminal 1500 using the back touch pad 1506. A location 1511 indicates a point at which the back touch long press 1510 is performed on the back touch pad 1506. The location 1511 may be mapped on or to the front display screen 1501 and thereby be displayed as an active area 1513, such as corresponding to the active area 1502. For example, when the back touch and long press 1510 is input, an icon 1513a of the corresponding location may be selected. The icon 1513a of the corresponding location may indicate the active area 1513, for example, according to exemplary embodiments.

Also, a back touch and drag 1520 may be input by the user 1540 using the back touch pad 1506. An arrow indicator 1521 indicates the back touch and drag 1520 and a direction of the back touch and drag 1520 on the back touch pad 1506. In response to the back touch and drag 1520, the location of the active area 1513 may be moved to a location of an active area 1523, for example, according to exemplary embodiments.

Further, a back touch and release 1530 may be input by the user 1540 using the back touch pad 1506. A back touch pad area, such as corresponding to back touch recognition area 1508, may be remapped on or to an active area 1531 of the front display screen 1501 of a location at which the back touch and release 1530 is performed. By the user 1540 touching the back touch pad 1506 in a relatively short time, without a reference gesture in a back touch release remapping area 1533, an operation defined in an icon for each area as, for example, icons 1531a, 1531b, 1531c, 1531d and 1531e corresponding to areas 1533a, 1533b, 1533c, 1533d and 1533e, such as corresponding to play, pause, rewind, fast forward, and the like, may be executed by the terminal 1500, according to exemplary embodiments.

Also, when a finger of the user 1540 moves on the back touch pad 1506, the active area 1513 selected as an icon 1513a corresponding to a finger location may move along corresponding to the movement of the finger on the back touch pad 1506, for example. And when the finger of the user 1540 is released from the back touch pad 1506, an icon on the front display screen 1501 corresponding to a released point may be selected, for example, according to exemplary embodiments.

Even though only gesture events of a long press, a drag, and a release are described with reference to the music application in the example illustration of FIG. 15, various gesture events such as flicking, a scroll, a tap, a double tap, and the like may be included and implemented, such as by the terminal controlling apparatus of terminal 1500. Also, operations that match the gesture events may be respectively determined and set. And the determined and set operations that match the gesture events may be used in execution of an application, such as the application and operations illustrated with reference to FIG. 15, according to exemplary embodiments.

Also, according to exemplary embodiments, when a photo icon is selected, such as may correspond to icon 1513a in FIG. 15, a photo album may be displayed on the display screen, such as the front display screen 1501, for example. Further, when a song icon is selected, such as may correspond to icon 1513a in FIG. 15, a title and lyrics of the selected song may be displayed on the display screen, such as the front display screen, of the terminal, for example. Also, an operation associated with each icon, such as displayed on the display screen as, for example, on the front display screen 1501, may be set and be changed for each application, such as by a terminal controlling apparatus according to exemplary embodiments, such as by the terminal controlling apparatus 200 or the terminal controlling apparatus 500, for example.

Further, exemplary embodiments of the present invention may be applied in an application of moving or enlarging a screen, such as a subway map or navigation application, in a similar manner to that discussed with respect to the enlarged image 1331 in the map view 1305 illustrated on front display screen 1301 of the terminal 1300 of FIG. 13, for example, such as by a terminal controlling apparatus according to exemplary embodiments, such as by the terminal controlling apparatus 200 or the terminal controlling apparatus 500, according to exemplary embodiments.

Also, exemplary embodiments of the present invention may be employed to enlarge and reduce a magnifier operation or an area for reading characters in E-book, and to move a page, for example, in a similar manner to that discussed with respect to the operations to illustrate the enlarged image 1331 or in moving the active area 1313 to the active area 1323 in the map view 1305 illustrated on the front display screen 1301 of the terminal 1300 of FIG. 13, for example, such as by a terminal controlling apparatus according to exemplary embodiments, such as by the terminal controlling apparatus 200 or the terminal controlling apparatus 500, according to exemplary embodiments.

And exemplary embodiments of the present invention may be effective to implement an up and down movement on the display screen of a terminal, such as on the front display screen 310 of the terminal 300, by a terminal controlling apparatus, such as the terminal controlling apparatus 200 or the terminal controlling apparatus 500, using a scroll gesture event, for example, according to exemplary embodiments.

Also, exemplary embodiments of the present invention may perform the same or similar operations as in relation to an E-book on a webpage executed in a terminal, and may be employed to switch a webpage by moving an icon on the display screen of a terminal, such as on the front display screen of a terminal as, for example, the icon 1513a on the front display screen 1501 of the terminal 1500, by a terminal controlling apparatus, such as the terminal controlling apparatus 200 or the terminal controlling apparatus 500, for example, according to exemplary embodiments.

Further, exemplary embodiments of the present invention may be used in searching for and enlarging a user's desired portion in a game such as displayed on the display screen of a terminal, such as on a front display screen of a terminal as, for example, on the front display screen 310 of terminal 300, by a terminal controlling apparatus, such as the terminal controlling apparatus 200 or the terminal controlling apparatus 500, for example, according to exemplary embodiments.

Also, exemplary embodiments of the present invention may associate a gesture event with an operation of a video player in a video player application such as in relation to a video being displayed on a display screen of a terminal, such as on a front display screen of a terminal as, for example, on the front display screen 310 of terminal 300, by a terminal controlling apparatus, such as the terminal controlling apparatus 200 or the terminal controlling apparatus 500, for example, according to exemplary embodiments.

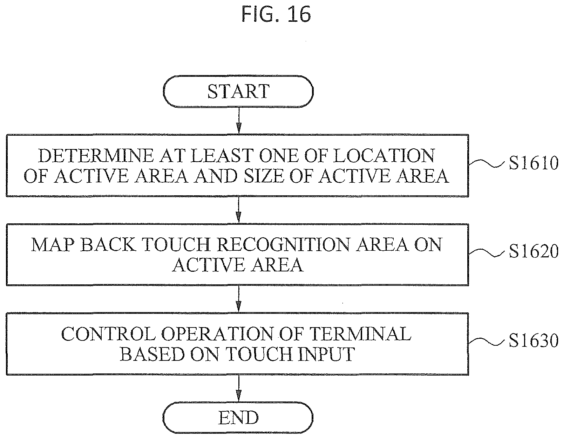

FIG. 16 is a flowchart illustrating a method for controlling a terminal using a touch on a surface of a terminal, such as a touch on a back of the terminal, according to exemplary embodiments of the present invention.

Referring to FIG. 16, in operation S1610, a terminal controlling apparatus, such as the terminal controlling apparatus 200 or the terminal controlling apparatus 500 of FIG. 5, for example, to control a terminal, such as the terminal 300 of FIG. 3, using a touch on a surface of the terminal as, for example, on a back of the terminal, according to exemplary embodiments, may determine at least one of a location of an active area displayed on a front display screen, such as on the front display screen 310 of terminal 300, and a size of the active area such as the active area 331, for example.

In operation S1620, the terminal controlling apparatus may map a touch recognition area on a first surface of the terminal on or to an active area on a second surface of the terminal, such as mapping a back touch recognition area as for example, the back touch recognition area 320a on the back touch pad area 320 located on the back touch pad 321, of the terminal, such as the terminal 300, on the active area, such as the active area 331, based on a size of the touch recognition area, such as the back touch recognition area, and the size of the active area, for example, according to exemplary embodiments.

In operation S1630, the terminal controlling apparatus may control an operation of the terminal, such as the terminal 300, based on a touch input on the touch recognition area, such as the back touch recognition area as, for example, on the back touch recognition area 320a on the back touch pad area 320 located on the back touch pad 321. The terminal controlling apparatus may control an application on the display screen, such as the front display screen as, for example, the front display screen 310, based on the touch input on the touch recognition area, such as on the back touch recognition area, for example, according to exemplary embodiments.

According to an exemplary embodiments, when a touch input on a touch recognition area on a surface of a terminal, such as a touch input on a back touch recognition area, is recognized, the terminal controlling apparatus may generate an interrupt and may store, in an address of a memory, touch location information about a location at which the touch input is performed.

Also, for example, according to exemplary embodiments, when the interrupt is recognized, the terminal controlling apparatus may verify touch location information from the address and may transmit converted touch location information that is converted to a location corresponding to a size of an active area.

Further, according to exemplary embodiments, the terminal controlling apparatus may determine an event type corresponding to the touch input based on the converted touch location information, and may convert the converted touch location information and information about the determined event type so as to be suitable for or compatible with a standard of an OS supported by the terminal, for example.

And, according to exemplary embodiments, the terminal controlling apparatus may execute an application on a display screen, such as on a front display screen, of the terminal based on the converted information to be suitable for or compatible with a standard.

Also, exemplary embodiments of the present invention using a touch on a back of the terminal facilitate control of operations and applications executed on the terminal with a relatively small movement of a grasped hand using a touch pad on a surface of a terminal, such as a back touch pad located on a back of a terminal, and thereby increase and facilitate convenience to a user of the terminal.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM discs and DVD; magnetooptical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention. In addition, the computer-readable media may be distributed to computer systems over a network, in which computer readable codes may be stored and executed in a distributed manner.

Terminals, apparatuses and methods for controlling an operation of or an application executed by a terminal by recognizing a touch input on a surface of a terminal, including: a mapping unit to map a touch recognition area on a first surface of the terminal on an active area on a display screen on a second surface of the terminal; a determining unit to determine at least one of a location of the active area to be displayed on the display screen and a size of the active area; and a control unit to control an operation of the terminal based on a touch input on the touch recognition area of the terminal. And a touch pad on the back of the terminal may receive the touch input, with the first surface located on the back and the second surface located on the front of the terminal.

## Claims

1. A terminal configured to control an operation according to a touch input, the terminal comprising:
a mapping unit (110; 210) to scale map a touch recognition area (320a) on a first surface of the terminal to an active area (331; 1202; 1302, 1313, 1323; 1402; 1502, 1513, 1523) which is an area selected by the user on a touch recognition display screen on a second surface of the terminal, by comparing the size of the touch recognition area and the size of the active area;
a determining unit (120; 220) to determine a location of the active area displayed on the display screen and the size of the active area;
a control unit (130; 230) to control an operation of the terminal based on a touch input on the touch recognition area (320a);
an activation determining unit (235) to determine whether to recognize the touch input on the touch recognition area based on whether an application supports a touch on the touch recognition area;
wherein the terminal further comprises a setting unit (237) to set, when a plurality of applications is executed using multitasking in the terminal, for each of the plurality of applications, whether said application is to be controlled in the response to a touch input on the touch recognition area or to be controlled in response to a touch input on the active area; and wherein the control unit (130; 230) is adapted to move the active area (331; 1202; 1302, 1313, 1323; 1402; 1502, 1513, 1523) corresponding to the touch input on the touch recognition area.

2. The terminal of claim 1, wherein
the first surface is a back of the terminal and the second surface is a front of the terminal.

3. The terminal of claim 1 or 2, wherein the control unit further comprises at least one of:
- a touch recognition unit (131; 231) to generate an interrupt to indicate that the touch input to the touch recognition area (320a) is recognized by the terminal and to determine location information about a location at which the touch input is performed;
- a drive unit (132; 232) to verify touch location information of the touch input to the touch recognition area and to transfer converted touch location information generated by the mapping unit (110; 210) corresponding to touch location information in the active area (331; 1202; 1302, 1313, 1323; 1402; 1502, 1513, 1523);
- a processing unit 133; 233; 423; 523, 524; 621; 722; 822) to determine an event type corresponding to the touch input based on converted touch location information generated by the mapping unit (110; 210) corresponding to touch location information in the active area; wherein the event type preferably comprises at least one of a gesture event and a key event corresponding to the touch input to the touch recognition area of the terminal;
- an execution unit (134; 234; 425; 525; 625; 725; 825) to execute an application on the display screen based on converted touch location information generated by the mapping unit (110; 210) corresponding to touch location information in the active area (331; 1202; 1302, 1313, 1323; 1402; 1502, 1513, 1523);
- a back touch recognition (231) unit to generate a gesture event corresponding to the touch input based on converted touch location information corresponding to touch location information in the active area; and
- an execution control unit (236) to interpret converted touch location information corresponding to touch location information in the active area as a reference gesture event, based on one or more gesture events set for an application.

4. The terminal of claim 3, further comprising:
a matching table including the converted touch location information and
the one or more set gesture events corresponding to an application,
wherein the execution control unit (236) searches the matching table for a gesture event corresponding to the touch input.

5. The terminal of one of claims 1 to 4,
wherein the size of the active area is equal to or less than a size of the display screen (310);
or/and
wherein a touch pad (320; 1206; 1306; 1406; 1506) to receive the touch input to the touch recognition area is provided, wherein the touch pad comprises the touch recognition area (320a);
or/and
wherein the determining unit (120; 320) determines the location of the active area based on a location at which the touch input is performed on the touch recognition area.

6. The terminal of claim 1,
wherein the mapping unit (110; 210) is adapted to map the touch recognition area to the active area by comparing a length of an axis x and a length of an axis y of the touch recognition area with a length of an axis x and a length of an axis y of the active area;
or/and
wherein the mapping unit (110; 210) is adapted to map the touch recognition area to a size of an icon area on the display screen corresponding to a location at which the touch input is performed;
or/and
wherein the mapping unit (110; 210) is adapted to generate converted touch location information by converting touch location information of the touch input to the touch recognition area to correspond to the size of the active area.

7. A method for controlling an operation of a terminal according to a touch input, the method comprising:
scale mapping (S930; S1620) a touch recognition area on a first surface of the terminal to an active area (331; 1202; 1302, 1313, 1323; 1402; 1502, 1513, 1523), which is an area selected by the user on a touch recognition display screen on a second surface of the terminal, by comparing the size of the touch recognition area and the size of the active area;
determining (S1610) a location of the active area and the size of the active area;
controlling (S1050; S1630) an operation of the terminal based on a touch input on the touch recognition area;
determining whether to recognize the touch input on the touch recognition area based on whether an application supports a touch on the touch recognition area;
wherein the method further comprises setting, when a plurality of applications is executed using multitasking in the terminal, for each of the plurality of applications, whether said application is to be controlled in the response to a touch input on the touch recognition area or to be controlled in response to a touch input on the active area; and
selectively moving the active area corresponding to the touch input on the touch recognition area.

8. The method of claim 7, wherein
the first surface is a back of the terminal and the second surface is a front of the terminal.

9. The method of claim 7 or 8,
further comprising:
generating an interrupt to indicate that the touch input to the touch recognition area is recognized by the terminal, and
determining location information about a location at which the touch input is performed;
or/and
further comprising:
verifying touch location information of the touch input to the touch recognition area, and
transferring to process by the terminal converted touch location information corresponding to the verified touch location information;
or/and
further comprising:
determining (S940) an event type corresponding to the touch input based on converted touch location information corresponding to touch location information in the active area; wherein the event type preferably comprises at least one of a gesture event and a key event corresponding to the touch input to the touch recognition area.

10. The method of one of claims 7 to 9,
further comprising:
executing an application on the display screen of the terminal based on converted touch location information generated corresponding to touch location information in the active area;
or/and
further comprising:
generating a gesture event corresponding to the touch input based on converted touch location information corresponding to touch location information in the active area;
or/and
further comprising:
interpreting converted touch location information corresponding to touch location information in the active area as a reference gesture event based on one or more gesture events set for an application.

11. The method of claim 10, further comprising:
storing the converted touch location information and the one or more set gesture events corresponding to an application, and
searching a matching table for a gesture event corresponding to the touch input in which the stored converted touch location information and the one or more gesture events are matched.

12. The method of one of claims 7 to 11,
further comprising:
determining the size of the active area and a size of the touch recognition area by scale mapping by comparing the size of the active area and the size of the touch recognition area;
or/and
further comprising:
mapping the touch recognition area based on a size of an icon area on the display screen corresponding to a location at which the touch input is performed;
or/and
further comprising:
generating converted touch location information by converting touch location information of the touch input to the touch recognition area to correspond to the size of the active area;
or/and
further comprising:
determining the location of the active area based on a location at which the touch input is performed on the touch recognition area.

13. A method according to one of claims 7 to 12, wherein the first surface of the terminal is a back surface of the terminal and the touch recognition area is a back touch recognition area of the terminal the method further comprising:
recognizing a back touch input occurring in the back touch recognition area of the terminal;
searching for an event that matches the recognized back touch input; and
applying the retrieved event to an application that is being executed on a front display screen of the terminal.

14. The method of claim 13, wherein
the searching for an event comprises generating a gesture event based on the recognized back touch input, and searching for a key event that matches the generated gesture event from among reference key events, and
the applying the retrieved event comprises applying the matching key event to the application that is being executed.

15. The method of claim 13 or 14, wherein the active area is displayed on the front display screen of the terminal, the method further comprising:
converting touch location information about a location at which the back touch input is performed to converted touch location information about a location corresponding to the size of the active area by comparing a size of the back touch recognition area and the determined size of the active area,
wherein the searching for an event comprises searching for an event that matches the converted touch location information.

16. The method of one of claims 13 to 15, further comprising:
generating an interrupt when the back touch input is recognized;
storing, in an address of a memory, touch location information about a location at which the back touch input is performed;
converting the stored touch location information to converted touch location information corresponding to an active area based on a difference between a size of the back touch recognition area and a size of the active area displayed on the front display screen of the terminal, when the interrupt is recognized;
generating a gesture event based on the converted touch location information; and
converting the converted touch location information and information about the generated gesture event to information compatible with a standard of an operating system (OS) that is supported by the terminal, wherein the searching for an event comprises searching for an event that matches information compatible with the standard.

## Patentansprüche

1. Endgerät, das zur Steuerung eines Betriebs gemäß einer Berührungseingabe konfiguriert ist, wobei das Endgerät aufweist:
eine Zuordnungseinheit (110; 210) zum Skalier-Zuordnen eines Berührungserkennungsbereichs (320a) auf einer ersten Oberfläche des Endgeräts zu einem aktiven Bereich (331; 1202; 1302, 1313, 1323; 1402; 1502, 1513, 1523), der ein Bereich ist, der vom Benutzer auf einem Berührungserkennungsanzeigeschirm auf einer zweiten Oberfläche des Endgeräts ausgewählt ist, durch Vergleichen der Größe des Berührungserkennungsbereichs mit der Größe des aktiven Bereichs;
eine Bestimmungseinheit (120; 220) zum Bestimmen eines Orts des auf dem Anzeigeschirm angezeigten aktiven Bereichs und der Größe des aktiven Bereichs;
eine Steuereinheit (130; 230) zum Steuern eines Betriebs des Endgeräts basierend auf einer Berührungseingabe auf dem Berührungserkennungsbereich (320a);
eine Aktivierungsbestimmungseinheit (235) zum Bestimmen, ob die Berührungseingabe auf dem Berührungserkennungsbereich zu erkennen ist, basierend darauf, ob eine Anwendung eine Berührung auf dem Berührungserkennungsbereich unterstützt, wobei das Endgerät ferner aufweist:
eine Setzeinheit (237), um, wenn eine Mehrzahl von Anwendungen mittels Multitasking in dem Endgerät ausgeführt wird, für jede der Mehrzahl von Anwendungen zu setzen, ob die Anwendung in Antwort auf eine Berührungseingabe auf dem Berührungserkennungsbereich gesteuert werden soll oder in Antwort auf eine Berührungseingabe auf dem aktiven Bereich gesteuert werden soll; und
wobei die Steuereinheit (130; 230) dazu ausgelegt ist, den aktiven Bereich (331; 1202; 1302, 1313, 1323; 1402; 1502, 1513, 1523) entsprechend der Berührungseingabe auf dem Berührungserkennungsbereich zu bewegen.

2. Das Endgerät von Anspruch 1, wobei die erste Oberfläche eine Rückseite des Endgeräts ist und die zweite Oberfläche eine Vorderseite des Endgeräts ist.

3. Das Endgerät von Anspruch 1 oder 2, wobei die Steuereinheit ferner zumindest eine aufweist von:
- einer Berührungserkennungseinheit (131; 231) zum Erzeugen einer Unterbrechung zum Anzeigen, dass die Berührungseingabe an dem Berührungserkennungsbereich (320a) von dem Endgerät erkannt wird, und zum Bestimmen von Ortsinformation über einen Ort, an dem die Berührungseingabe durchgeführt wird;
- einen Treibereinheit (132; 232) zum Verifizieren von Berührungsortsinformation der Berührungseingabe an dem Berührungserkennungsbereich und zum Übertragen von umgewandelter Berührungsortsinformation, die von der Zuordnungseinheit (110; 210) entsprechend Berührungsortsinformation in dem aktiven Bereich (331; 1202; 1302, 1313, 1323; 1402; 1502, 1513, 1523) erzeugt wird;
- einer Prozessoreinheit (133; 233; 423; 523, 524; 621; 722; 822) zum Bestimmen eines Ereignistyps entsprechend der Berührungseingabe basierend auf umgewandelter Berührungsortsinformation, die von der Zuordnungseinheit (110; 210) entsprechend Berührungsortsinformation in dem aktiven Bereich erzeugt wird; wobei der Ereignistyp bevorzugt ein Gestenereignis und/oder ein Tastereignis entsprechend der Berührungseingabe an dem Berührungserkennungsbereich des Endgeräts aufweist;
- einer Ausführungseinheit (134; 234; 425; 525; 625; 725; 825) zum Ausführen einer Anwendung auf dem Anzeigeschirm beruhend auf umgewandelter Berührungsortsinformation, die durch die Zuordnungseinheit (110; 210) entsprechend Berührungsortsinformation in dem aktiven Bereich (331; 1202; 1302, 1313, 1323; 1402; 1502, 1513, 1523) erzeugt wird;
- einer Rückseitenberührungserkennungseinheit (231) zum Erzeugen eines Gestenereignisses entsprechend der Berührungseingabe basierend auf umgewandelter Berührungsortsinformation entsprechend Berührungsortsinformation in dem aktiven Bereich; und
- einer Ausführungssteuereinheit (236) zum Interpretieren von umgewandelter Berührungsortsinformation entsprechend Berührungsortsinformation in dem aktiven Bereich als Referenzgestenereignis basierend auf einem oder mehreren Gestenereignissen, die für eine Anwendung gesetzt sind.

4. Das Endgerät von Anspruch 3, das ferner aufweist:
eine Abgleichtabelle, die die umgewandelte Berührungsortsinformation und ein oder mehrere gesetzte Gestenereignisse entsprechend einer Anwendung enthält, wobei die Ausführungssteuereinheit (236) die Abgleichtabelle nach einem Gestenereignis entsprechend der Berührungseingabe absucht.

5. Das Endgerät von einem der Ansprüche 1 bis 4,
wobei die Größe des aktiven Bereichs gleich oder kleiner als eine Größe des Anzeigeschirms (310) ist;
oder/und
wobei ein Berührungsfeld (320; 1206; 1306; 1406; 1506) vorgesehen ist, um die Berührungseingabe an dem Berührungserkennungsbereich zum empfangen, wobei das Berührungsfeld den Berührungserkennungsbereich (320a) aufweist;
oder/und
wobei die Bestimmungseinheit (120; 320) den Ort des aktiven Bereichs basierend auf einem Ort bestimmt, an dem die Berührungseingabe an dem Berührungserkennungsbereich durchgeführt wird.

6. Das Endgerät von Anspruch 1,
wobei die Zuordnungseinheit (110; 210) dazu ausgelegt ist, den Berührungserkennungsbereich dem aktiven Bereich zuzuordnen, durch Vergleich einer Länge einer Achse x und einer Länge einer Achse y des Berührungserkennungsbereichs mit einer Länge einer Achse x und einer Länge einer Achse y des aktiven Bereichs;
oder/und
wobei die Zuordnungseinheit (110; 210) dazu ausgelegt ist, den Berührungserkennungsbereich auf eine Größe eines Icon-Bereichs auf dem Anzeigeschirm entsprechend einem Ort, an dem die Berührungseingabe durchgeführt wird, zuzuordnen;
oder/und
wobei die Zuordnungseinheit (110; 210) dazu ausgelegt ist, umgewandelte Berührungsortsinformation zu erzeugen, durch Umwandeln von Berührungsortsinformation der Berührungseingabe an dem Berührungserkennungsbereich entsprechend der Größe des aktiven Bereichs.

7. Verfahren zum Steuern eines Betriebs eines Endgeräts gemäß einer Berührungseingabe, wobei das Verfahren aufweist:
Skalier-Zuordnen (S930; S1620) eines Berührungserkennungsbereichs auf einer ersten Oberfläche des Endgeräts zu einem aktiven Bereich (331; 1202; 1302, 1313, 1323; 1402; 1502, 1513, 1523), der ein Bereich ist, der vom Benutzer auf einem Berührungserkennungsanzeigeschirm auf einer zweiten Oberfläche des Endgeräts ausgewählt wird, durch Vergleichen der Größe des Berührungserkennungsbereichs mit der Größe des aktiven Bereichs;
Bestimmen (S1610) eines Orts des aktiven Bereichs und der Größe des aktiven Bereichs;
Steuern (S1050; S1630) eines Betriebs des Endgeräts basierend auf einer Berührungseingabe auf dem Berührungserkennungsbereich;
Bestimmen, ob die Berührungseingabe auf dem Berührungserkennungsbereich zu erkennen ist, basierend darauf, ob eine Anwendung eine Berührung auf dem Berührungserkennungsbereich unterstützt; und
wobei das Verfahren ferner aufweist:
Setzen, wenn eine Mehrzahl von Anwendungen mittels Multitasking in dem Endgerät ausgeführt wird, für jede der Mehrzahl von Anwendungen, ob die Anwendung in Antwort auf eine Berührungseingabe auf dem Berührungserkennungsbereich gesteuert werden soll oder in Antwort auf eine Berührungseingabe auf dem aktiven Bereich gesteuert werden soll;
selektives Bewegen des aktiven Bereichs entsprechend der Berührungseingabe auf dem Berührungserkennungsbereich.

8. Das Verfahren von Anspruch 7, die erste Oberfläche eine Rückseite des Endgeräts ist und die zweite Oberfläche eine Vorderseite des Endgeräts ist.

9. Das Verfahren von Anspruch 7 oder 8, das ferner aufweist:
Erzeugen einer Unterbrechung, um anzuzeigen, dass die Berührungseingabe an dem Berührungserkennungsbereich vom Endgerät erkannt wird, und
Bestimmen von Ortsinformation über einen Ort, an dem die Berührungseingabe durchgeführt wird;
oder/und
das ferner aufweist:
Verifizieren von Berührungsortsinformation der Berührungseingabe auf dem Berührungserkennungsbereich, und
Überführen, zur Bearbeitung durch das Endgerät, von umgewandelter Berührungsortsinformation entsprechend der verifizierten Berührungsortsinformation;
oder/und
das ferner aufweist: Bestimmen (S940) eines Ereignistyps entsprechend der Berührungseingabe basierend auf umgewandelter Berührungsortsinformation entsprechend Berührungsortsinformation in dem aktiven Bereich; wobei der Ereignistyp bevorzugt ein Gestenereignis und/oder ein Tastereignis entsprechend der Berührungseingabe an dem Berührungserkennungsbereich aufweist.

10. Das Verfahren von einem der Ansprüche 7 bis 9, das ferner aufweist:
Ausführen einer Anwendung auf dem Anzeigeschirm des Endgeräts basierend auf umgewandelter Berührungsortsinformation, die entsprechend Berührungsortsinformation in dem aktiven Bereich erzeugt wird;
oder/und
das ferner aufweist:
Erzeugen eines Gestenereignisses entsprechend der Berührungseingabe basierend auf umgewandelter Berührungsortsinformation entsprechend Berührungsortsinformation in dem aktiven Bereich;
oder/und
das ferner aufweist:
Interpretieren von umgewandelter Berührungsortsinformation entsprechend Berührungsortsinformation in dem aktiven Bereich als Referenzgestenereignis basierend auf einem oder mehreren Gestenereignissen, die für eine Anwendung gesetzt sind.

11. Das Verfahren von Anspruch 10, das ferner aufweist:
Speichern der umgewandelten Berührungsortsinformation und des einen oder der mehreren gesetzten Gestenereignisse entsprechend einer Anwendung, und
Absuchen einer Abgleichtabelle für ein Gestenereignis entsprechend der Berührungseingabe, in der die gespeicherte umgewandelte Berührungsortsinformation und das eine oder die mehreren Gestenereignisse abgeglichen werden.

12. Das Verfahren von einem der Ansprüche 7 bis 11, das ferner aufweist:
Bestimmen der Größe des aktiven Bereichs und einer Größe des Berührungserkennungsbereichs durch Skalier-Zuordnung durch Vergleichen der Größe des aktiven Bereichs mit der Größe des Berührungserkennungsbereichs;
oder/und
das ferner aufweist:
Zuordnen des Berührungserkennungsbereichs basierend auf einer Größe eines Icon-Bereichs auf dem Anzeigeschirm entsprechend einem Ort, an dem die Berührungseingabe durchgeführt wird;
oder/und
das ferner aufweist:
Erzeugen von umgewandelter Berührungsortsinformation durch Umwandeln von Berührungsortsinformation der Berührungseingabe an dem Berührungserkennungsbereich entsprechend der Größe des aktiven Bereichs;
oder/und
das ferner aufweist:
Bestimmen des Orts des aktiven Bereichs basierend auf einem Ort, an dem die Berührungseingabe auf dem Berührungserkennungsbereich durchgeführt wird.

13. Verfahren nach einem der Ansprüche 7 bis 12, wobei die erste Oberfläche des Endgeräts eine Rückseite des Endgeräts ist und der Berührungserkennungsbereich ein rückseitiger Berührungserkennungsbereich des Endgeräts ist, wobei das Verfahren ferner aufweist:
Erkennen einer rückseitigen Berührungseingabe, die in dem rückseitigen Berührungserkennungsbereich des Endgeräts stattfindet;
Suchen nach einem Ereignis, das zu der erkannten rückseitigen Berührungseingabe passt; und
Anwenden des abgefragten Ereignisses auf eine Anwendung, die auf dem vorderen Anzeigeschirm des Endgeräts gerade ausgeführt wird.

14. Das Verfahren von Anspruch 13, wobei das Suchen nach einem Ereignis aufweist, ein Gestenereignis basierend auf der erkannten rückseitigen Berührungseingabe zu erzeugen, und unter Referenztastereignissen nach einem Tastereignis zu suchen, das zu dem erzeugten Gestenereignis passt, und
das Anwenden des abgefragten Ereignisses aufweist, das Abgleichtastereignis auf die Anwendung anzuwenden, die gerade ausgeführt wird.

15. Das Verfahren von Anspruch 13 oder 14, wobei der aktive Bereich auf dem vorderen Anzeigeschirm des Endgeräts angezeigt wird, wobei das Verfahren ferner aufweist:
Umwandeln von Berührungsortsinformation über einen Ort, an dem die rückseitige Berührungseingabe durchgeführt wird, in umgewandelte Berührungsortsinformation über einen Ort entsprechend der Größe des aktiven Bereichs, durch Vergleichen einer Größe des rückseitigen Berührungserkennungsbereichs mit der bestimmten Größe des aktiven Bereichs,
wobei das Suchen nach einem Ereignis aufweist, nach einem Ereignis zu suchen, das zu der umgewandelten Berührungsortsinformation passt.

16. Das Verfahren von einem der Ansprüche 13 bis 15, das ferner aufweist:
Erzeugen einer Unterbrechung, wenn die rückseitige Berührungseingabe erkannt wird;
Speichern, in einer Adresse eines Speichers, von Berührungsortsinformation über einen Ort, an dem die rückseitige Berührungseingabe durchgeführt wird;
Umwandeln der gespeicherten Berührungsortsinformation in umgewandelte Berührungsortsinformation entsprechend einem aktiven Bereich basierend auf einer Differenz zwischen einer Größe des rückseitigen Berührungserkennungsbereichs und einer Größe des aktiven Bereichs, der auf dem vorderen Anzeigeschirm des Endgeräts angezeigt wird, wenn die Unterbrechung erkannt wird;
Erzeugen eines Gestenereignisses basierend auf der umgewandelten Berührungsortsinformation; und
Umwandeln der umgewandelten Berührungsortsinformation und der Information über das erzeugte Gestenereignis in Information, die mit einer Norm eines Betriebssystems (OS) kompatibel ist, das von dem Endgerät unterstützt wird,
wobei das Suchen nach einem Ereignis aufweist, nach einem Ereignis zu suchen, das zu mit der Norm kompatibler Information passt.

## Revendications

1. Terminal configuré pour commander une opération en fonction d'une entrée tactile, le terminal comprenant :
une unité de mise en concordance (110 ; 210) pour mettre en concordance à l'échelle une zone de reconnaissance tactile (320a) sur une première surface du terminal avec une zone active (331 ; 1202 ; 1302, 1313, 1323 ; 1402 ; 1502, 1513, 1523) qui est une zone sélectionnée par l'utilisateur sur un écran d'affichage de reconnaissance tactile sur une deuxième surface du terminal, par la comparaison de la taille de la zone de reconnaissance tactile et de la taille de la zone active ;
une unité de détermination (120 ; 220) pour déterminer un emplacement de la zone active affichée sur l'écran d'affichage et la taille de la zone active ;
une unité de commande (130 ; 230) pour commander une opération du terminal sur la base d'une entrée tactile sur la zone de reconnaissance tactile (320a) ;
une unité de détermination d'activation (235) pour déterminer s'il faut reconnaître l'entrée tactile sur la zone de reconnaissance tactile selon si une application prend en charge un toucher sur la zone de reconnaissance tactile ;
dans lequel le terminal comprend en outre
une unité de définition (237) pour définir, lorsqu'une pluralité d'applications est exécutée en utilisant une fonctionnalité multitâche dans le terminal, pour chacune de la pluralité d'applications, si ladite application doit être commandée en réponse à une entrée tactile sur la zone de reconnaissance tactile ou doit être commandée en réponse à une entrée tactile sur la zone active ; et
dans lequel l'unité de commande (130 ; 230) est apte à déplacer la zone active (331 ; 1202 ; 1302, 1313, 1323 ; 1402 ; 1502, 1513, 1523) coïncidant avec l'entrée tactile sur la zone de reconnaissance tactile.

2. Terminal selon la revendication 1, dans lequel
la première surface est un arrière du terminal et la deuxième surface est un avant du terminal.

3. Terminal selon la revendication 1 ou 2, dans lequel l'unité de commande comprend en outre au moins l'une de :
- une unité de reconnaissance tactile (131 ; 231) pour générer une interruption pour indiquer que l'entrée tactile sur la zone de reconnaissance tactile (320a) est reconnue par le terminal et pour déterminer des informations d'emplacement relatives à un emplacement auquel l'entrée tactile est effectuée ;
- une unité de pilotage (132 ; 232) pour vérifier des informations d'emplacement tactile de l'entrée tactile sur la zone de reconnaissance tactile et pour transférer des informations d'emplacement tactile converties générées par l'unité de mise en concordance (110 ; 210) coïncidant avec des informations d'emplacement tactile dans la zone active (331 ; 1202 ; 1302, 1313, 1323 ; 1402 ; 1502, 1513, 1523) ;
- une unité de traitement (133 ; 233 ; 423 ; 523, 524 ; 621 ; 722 ; 822) pour déterminer un type d'événement coïncidant avec l'entrée tactile sur la base d'informations d'emplacement tactile converties générées par l'unité de mise en concordance (110 ; 210) coïncidant avec des informations d'emplacement tactile dans la zone active ; dans lequel le type d'événement comprend de préférence au moins l'un d'un événement de geste et d'un événement de clé coïncidant avec l'entrée tactile sur la zone de reconnaissance tactile du terminal ;
- une unité d'exécution (134 ; 234 ; 425 ; 525 ; 625 ; 725 ; 825) pour exécuter une application sur l'écran d'affichage sur la base d'informations d'emplacement tactile converties générées par l'unité de mise en concordance (110 ; 210) coïncidant avec des informations d'emplacement tactile dans la zone active (331 ; 1202 ; 1302, 1313, 1323 ; 1402 ; 1502, 1513, 1523) ;
- une unité de reconnaissance tactile arrière (231) pour générer un événement de geste coïncidant avec l'entrée tactile sur la base d'informations d'emplacement tactile converties coïncidant avec des informations d'emplacement tactile dans la zone active ; et
- une unité de commande d'exécution (236) pour interpréter des informations d'emplacement tactile converties coïncidant avec des informations d'emplacement tactile dans la zone active en tant qu'un événement de geste de référence, sur la base d'un ou plusieurs événements de geste définis pour une application.

4. Terminal selon la revendication 3, comprenant en outre :
une table de correspondance incluant les informations d'emplacement tactile converties et les un ou plusieurs événements de geste définis coïncidant avec une application,
dans lequel l'unité de commande d'exécution (236) recherche, dans la table de correspondance, un événement de geste coïncidant avec l'entrée tactile.

5. Terminal selon l'une des revendications 1 à 4,
dans lequel la taille de la zone active est inférieure ou égale à une taille de l'écran d'affichage (310) ;
et/ou
dans lequel un pavé tactile (320 ; 1206 ; 1306 ; 1406 ; 1506) pour recevoir l'entrée tactile sur la zone de reconnaissance tactile est prévu, dans lequel le pavé tactile comprend la zone de reconnaissance tactile (320a) ;
et/ou
dans lequel l'unité de détermination (120 ; 230) détermine l'emplacement de la zone active sur la base d'un emplacement auquel l'entrée tactile est effectuée sur la zone de reconnaissance tactile.

6. Terminal selon la revendication 1,
dans lequel l'unité de mise en concordance (110 ; 210) est apte à mettre la zone de reconnaissance tactile en concordance avec la zone active par la comparaison d'une longueur d'un axe x et d'une longueur d'un axe y de la zone de reconnaissance tactile à une longueur d'un axe x et à une longueur d'un axe y de la zone active ;
et/ou
dans lequel l'unité de mise en concordance (110 ; 210) est apte à mettre la zone de reconnaissance tactile en concordance avec une taille d'une zone d'icône sur l'écran d'affichage coïncidant avec un emplacement auquel l'entrée tactile est effectuée ;
et/ou
dans lequel l'unité de mise en concordance (110 ; 210) est apte à générer des informations d'emplacement tactile converties par la conversion d'informations d'emplacement tactile de l'entrée tactile sur la zone de reconnaissance tactile pour coïncider avec la taille de la zone active.

7. Procédé de commande d'une opération d'un terminal en fonction d'une entrée tactile, le procédé comprenant :
la mise en concordance à l'échelle (S930 ; S1620) d'une zone de reconnaissance tactile sur une première surface du terminal avec une zone active (331 ; 1202 ; 1302, 1313, 1323 ; 1402 ; 1502, 1513, 1523) qui est une zone sélectionnée par l'utilisateur sur un écran d'affichage de reconnaissance tactile sur une deuxième surface du terminal, par la comparaison de la taille de la zone de reconnaissance tactile et de la taille de la zone active ;
la détermination (S1610) d'un emplacement de la zone active et de la taille de la zone active ;
la commande (S1050 ; S1630) d'une opération du terminal sur la base d'une entrée tactile sur la zone de reconnaissance tactile ;
le fait de déterminer s'il faut reconnaître l'entrée tactile sur la zone de reconnaissance tactile selon si une application prend en charge un toucher sur la zone de reconnaissance tactile ;
dans lequel le procédé comprend en outre
le fait de définir, lorsqu'une pluralité d'applications est exécutée en utilisant une fonctionnalité multitâche dans le terminal, pour chacune de la pluralité d'applications, si ladite application doit être commandée en réponse à une entrée tactile sur la zone de reconnaissance tactile ou doit être commandée en réponse à une entrée tactile sur la zone active ; et
le déplacement sélectif de la zone active coïncidant avec l'entrée tactile sur la zone de reconnaissance tactile.

8. Procédé selon la revendication 7, dans lequel
la première surface est un arrière du terminal et la deuxième surface est un avant du terminal.

9. Procédé selon la revendication 7 ou 8,
comprenant en outre :
la génération d'une interruption pour indiquer que l'entrée tactile sur la zone de reconnaissance tactile est reconnue par le terminal, et
la détermination d'informations d'emplacement relatives à un emplacement auquel l'entrée tactile est effectuée ;
et/ou
comprenant en outre :
la vérification d'informations d'emplacement tactile de l'entrée tactile sur la zone de reconnaissance tactile, et
le transfert, en vue d'un traitement par le terminal, des informations d'emplacement tactile converties coïncidant avec les informations d'emplacement tactile vérifiées ; et/ou
comprenant en outre :
la détermination (S940) d'un type d'événement coïncidant avec l'entrée tactile sur la base d'informations d'emplacement tactile converties coïncidant avec des informations d'emplacement tactile dans la zone active ; dans lequel le type d'événement comprend de préférence au moins l'un d'un événement de geste et d'un événement de clé coïncidant avec l'entrée tactile sur la zone de reconnaissance tactile.

10. Procédé selon l'une des revendications 7 à 9,
comprenant en outre :
l'exécution d'une application sur l'écran d'affichage du terminal sur la base d'informations d'emplacement tactile converties générées coïncidant avec des informations d'emplacement tactile dans la zone active ;
et/ou
comprenant en outre :
la génération d'un événement de geste coïncidant avec l'entrée tactile sur la base d'informations d'emplacement tactile converties coïncidant avec des informations d'emplacement tactile dans la zone active ;
et/ou
comprenant en outre :
l'interprétation d'informations d'emplacement tactile converties coïncidant avec des informations d'emplacement tactile dans la zone active en tant qu'un événement de geste de référence, sur la base d'un ou plusieurs événements de geste définis pour une application.

11. Procédé selon la revendication 10, comprenant en outre :
la mémorisation des informations d'emplacement tactile converties et des un ou plusieurs événements de geste définis coïncidant avec une application, et
la recherche, dans une table de correspondance dans laquelle les informations d'emplacement tactile converties mémorisées et les un ou plusieurs événements de geste sont mis en correspondance, d'un événement de geste coïncidant avec l'entrée tactile.

12. Procédé selon l'une des revendications 7 à 11,
comprenant en outre
la détermination de la taille de la zone active et d'une taille de la zone de reconnaissance tactile par la mise en concordance à l'échelle par la comparaison de la taille de la zone active et de la taille de la zone de reconnaissance tactile ;
et/ou
comprenant en outre :
la mise en concordance de la zone de reconnaissance tactile sur la base d'une taille d'une zone d'icône sur l'écran d'affichage coïncidant avec un emplacement auquel l'entrée tactile est effectuée ;
et/ou
comprenant en outre :
la génération d'informations d'emplacement tactile converties par la conversion d'informations d'emplacement tactile de l'entrée tactile sur la zone de reconnaissance tactile pour coïncider avec la taille de la zone active ;
et/ou
comprenant en outre :
la détermination de l'emplacement de la zone active sur la base d'un emplacement auquel l'entrée tactile est effectuée sur la zone de reconnaissance tactile.

13. Procédé selon l'une des revendications 7 à 12,
dans lequel la première surface du terminal est une surface arrière du terminal et la zone de reconnaissance tactile est une zone de reconnaissance tactile arrière du terminal,
le procédé comprenant en outre :
la reconnaissance d'une entrée tactile arrière survenant dans la zone de reconnaissance tactile arrière du terminal ;
la recherche d'un événement qui correspond à l'entrée tactile arrière reconnue ; et
l'application de l'événement récupéré à une application qui est en cours d'exécution sur un écran d'affichage avant du terminal.

14. Procédé selon la revendication 13, dans lequel
la recherche d'un événement comprend la génération d'un événement de geste sur la base de l'entrée tactile arrière reconnue, et la recherche d'un événement de clé qui correspond à l'événement de geste généré parmi des événements de clé de référence, et
l'application de l'événement récupéré comprend l'application de l'événement de clé correspondant à l'application en cours d'exécution.

15. Procédé selon la revendication 13 ou 14, dans lequel la zone active est affichée sur l'écran d'affichage avant du terminal, le procédé comprenant en outre :
la conversion d'informations d'emplacement tactile relatives à un emplacement auquel l'entrée tactile arrière est effectuée en informations d'emplacement tactile converties relatives à un emplacement coïncidant avec la taille de la zone active par la comparaison d'une taille de la zone de reconnaissance tactile arrière et de la taille déterminée de la zone active,
dans lequel la recherche d'un événement comprend la recherche d'un événement qui correspond aux informations d'emplacement tactile converties.

16. Procédé selon l'une des revendications 13 à 15, comprenant en outre :
la génération d'une interruption lorsque l'entrée tactile arrière est reconnue ;
la mémorisation, à une adresse d'une mémoire, d'informations d'emplacement tactile relatives à un emplacement auquel l'entrée tactile arrière est effectuée ;
la conversion des informations d'emplacement tactile mémorisées en informations d'emplacement tactile converties coïncidant avec une zone active sur la base d'une différence entre une taille de la zone de reconnaissance tactile arrière et d'une taille de la zone active affichée sur l'écran d'affichage avant du terminal, lorsque l'interruption est reconnue ;
la génération d'un événement de geste sur la base des informations d'emplacement tactile converties ; et
la conversion des informations d'emplacement tactile converties et des informations relatives à l'événement de geste généré en informations compatibles avec une norme d'un système d'exploitation (OS) qui est pris en charge par le terminal, dans lequel la recherche d'un événement comprend la recherche d'un événement qui correspond à des informations compatibles avec la norme.
